# EUROPEAN PATENT APPLICATION

(11) **EP 4 757 406 A1**
(43) Date of publication of application: **10.06.2026**
(21) Application number: 24861940.5
(22) Date of filing: 02.09.2024
(51) Int. Cl.: H04W 28/04

(54) **COMMUNICATION METHOD AND RELATED DEVICE**

(30) Priority: 04.09.2023 CN 202311138963
(71) Applicant: HUAWEI TECHNOLOGIES CO., LTD., Shenzhen, Guangdong 518129 (CN)
(72) Inventor: PU, Hongyi, Shenzhen, Guangdong 518129 (CN); ZHANG, Bo, Shenzhen, Guangdong 518129 (CN); SHAO, Guoqiang, Shenzhen, Guangdong 518129 (CN)
(74) Representative: MERH-IP Matias Erny Reichl Hoffmann Patentanwälte PartG mbB
(86) International application number: PCT/CN2024/116398
(87) International publication number: WO 2025/051097

(57) **Abstract**

A communication method and a related apparatus are provided. The method includes: A first SEPP sends a protected first HTTP message to an IPX, where the protected first HTTP message is determined after a first HTTP message is protected based on a first N32-f context. The first SEPP performs a corresponding error response operation based on a transmission error indicated by first indication information sent by the IPX. For example, the first SEPP re-exchanges a parameter with a second SEPP to obtain a second N32-f context, and after the first HTTP message is protected based on the second N32-f context, the first SEPP sends a re-protected first HTTP message to the IPX; or the first SEPP modifies the first HTTP message, to obtain a second HTTP message, and after the second HTTP message is protected based on the first N32-f context, the first SEPP sends a protected second HTTP message to the IPX. This application helps maintain normal communication.

## Description

This application claims priority to Chinese Patent Application No. 202311138963.3, filed with the China National Intellectual Property Administration on September 4, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

Currently, in a roaming architecture, a consumer's SEPP (consumer's SEPP, cSEPP) in a visited public land mobile network (visited public land mobile network, vPLMN) may send roaming messages to a consumer's IPX (consumer's IPX, cIPX), then the cIPX sends the roaming messages to a producer's IPX (producer's IPX, pIPX), and finally the pIPX sends the roaming messages to a producer's SEPP (producer's SEPP, pSEPP) in a home PLMN (home PLMN, hPLMN), to transfer the roaming messages between different PLMNs.

Currently, SEPPs may discover errors occurring during transfer of roaming messages, generate error messages, and send the error messages to peer SEPPs. With expansion of IPX functionalities, IPX may also discover errors and generate error messages. However, the current relevant standards do not define a response mechanism following the generation of such error messages, resulting in communication failures between SEPPs in different PLMNs.

### SUMMARY

This application provides a communication method and a related apparatus, to help maintain normal communication.

According to a first aspect, this application provides a communication method, performed by a first SEPP. The first SEPP may be the first SEPP, or may be a unit or module (for example, a chip) that has a corresponding function and that is in the first SEPP. In the method, the first SEPP performs security protection on a first hypertext transfer protocol HTTP message by using a first N32-f context between the first SEPP and a second SEPP, to obtain a protected first HTTP message, where the first HTTP message is used to implement a roaming service between the first SEPP and the second SEPP. The first SEPP sends the protected first HTTP message to an internet protocol exchange service IPX, where the IPX is used to route a message sent by the first SEPP to the second SEPP. The first SEPP receives an error message from the IPX, where the error message includes first indication information, and the first indication information indicates a transmission error of the first HTTP message. The first SEPP performs an error response operation corresponding to the transmission error.

In a possible design, the error response operation includes any one of the following:
the first SEPP re-exchanges a parameter with the second SEPP to obtain a second N32-f context between the first SEPP and the second SEPP, the first SEPP performs security protection on the first HTTP message by using the second N32-f context, to obtain a re-protected first HTTP message, and the first SEPP sends the re-protected first HTTP message to the IPX; or
the first SEPP modifies the first HTTP message based on the first indication information, to obtain a second HTTP message, the first SEPP performs security protection on the second HTTP message by using the first N32-f context, to obtain a protected second HTTP message, and the first SEPP sends the protected second HTTP message to the IPX.

In this application, the IPX may be a cIPX or a pIPX. This is not limited. It should be understood that an operation manner of how to respond after a SEPP receives the first indication information that is sent by the IPX and that indicates the transmission error is defined in this application, to help maintain normal communication between SEPPs in different PLMNs.

In a possible design, that the first indication information indicates the transmission error of the first HTTP message includes:
the first indication information indicates that a first information element IE is encrypted in the first HTTP message while the IPX requires that the first information element not be encrypted; or
the first indication information indicates that a second IE is not encrypted in the first HTTP message while the IPX requires that the second IE be encrypted.

In this implementation, two new error types are proposed: ①The IPX determines whether a first IE in the protected first HTTP message is encrypted, and when the first IE is encrypted (that is, the IPX determines that the IE that was expected to be transmitted in plaintext is encrypted for transmission), the IPX sends first indication information to the first SEPP, where the first indication information indicates that the first IE is encrypted in the protected first HTTP message while the IPX requires that the first IE not be encrypted; and ②the IPX determines whether a second IE in the protected first HTTP message is encrypted, and when the second IE is not encrypted (that is, the IPX determines that an IE that was expected to encrypted for transmission is transmitted in plaintext), the IPX sends the first indication information to the first SEPP, where the first indication information indicates that the second IE is not encrypted in the protected first HTTP message while the IPX requires that the second IE be encrypted. For the error type ①, the first SEPP may perform plaintext transmission of the first IE in the first HTTP message, to resolve a transmission error caused by the error type. For the error type ②, the first SEPP may encrypt the second IE in the first HTTP message for transmission, to resolve a transmission error caused by the error type.

In a possible design, an encryption policy that is for the first IE and that is in the first N32-f context is that the first IE is encrypted, and an encryption policy that is for the first IE and that is in the second N32-f context is that the first IE is not encrypted; or
an encryption policy that is for the second IE and that is in the first N32-f context is that the second IE is not encrypted, and an encryption policy that is for the second IE and that is in the second N32-f context is that the second IE is encrypted.

In a possible design, that the first SEPP re-exchanges the parameter with the second SEPP to obtain the second N32-f context between the first SEPP and the second SEPP includes:
the first SEPP sends a parameter exchange request to the second SEPP, where an encryption policy included in the parameter exchange request for the first IE is that the first IE is not encrypted; and
the first SEPP receives a parameter exchange response from the second SEPP, where an encryption policy included in the parameter exchange response for the first IE is that the first IE is not encrypted; or
the first SEPP sends a parameter exchange request to the second SEPP, where an encryption policy included in the parameter exchange request for the second IE is that the second IE is encrypted; and
the first SEPP receives a parameter exchange response from the second SEPP, where an encryption policy included in the parameter exchange response for the second IE is that the second IE is encrypted.

In a possible design, that the first indication information indicates the transmission error of the first HTTP message includes:
when the protected first HTTP message includes a plaintext identifier of a first network function NF, the first indication information indicates that a network topology of a public land mobile network PLMN in which the first SEPP is located is not hidden, where the first NF is a network element requesting the roaming service.

In this implementation, a new error type is proposed. To be specific, the network topology of the PLMN in which the first SEPP is located is not hidden. For the error type, the first SEPP may convert, into an anonymous identifier of the first NF, the plaintext identifier that is of the first NF and that is in the first HTTP message, and replace, with the anonymous identifier of the first NF, the plaintext identifier that is of the first NF and that is in the first HTTP message, to obtain the second HTTP message. That the second HTTP message includes the anonymous identifier of the first NF means that the network topology of the PLMN in which the first SEPP is located is hidden. Therefore, a transmission requirement of the IPX is met, so that the IPX can correctly route the second HTTP message.

In a possible design, that the first SEPP modifies the first HTTP message based on the first indication information, to obtain the second HTTP message includes:
anonymizing the plaintext identifier of the first NF in the first HTTP message, to obtain an anonymous identifier of the first NF; and
replacing, with the anonymous identifier of the first NF, the plaintext identifier of the first NF in the first HTTP message, to obtain the second HTTP message.

In a possible design, that the first indication information indicates the transmission error of the first HTTP message includes:
the first indication information indicates that a message format of the first HTTP message is not a first format.

In this implementation, a new error type is proposed. To be specific, the message format of the first HTTP message is not the first format. Herein, the first format may be a preset format, for example, a JSON format. For the error type, the first SEPP may convert the message format of the first HTTP message into the first format, to obtain the second HTTP message. Therefore, a requirement of the IPX for transmission of a message in the first format can be met, so that the IPX can subsequently correctly route the second HTTP message.

In a possible design, that the first SEPP modifies the first HTTP message based on the first indication information, to obtain the second HTTP message includes:
the first SEPP converts the message format of the first HTTP message into the first format, to obtain the second HTTP message.

In a possible design, that the first SEPP receives the first indication information from the IPX includes:
the first SEPP receives a first message from the IPX, where the first message includes problem details ProblemDetails, and ProblemDetails includes the first indication information.

In this implementation, ProblemDetails may be reused to carry the first indication information, and operability is high.

In a possible design, ProblemDetails further includes a first signature corresponding to the first indication information, or the first message further includes a first signature corresponding to the first indication information, where the first signature is used to protect integrity of the first indication information.

Before the first SEPP performs the error response operation corresponding to the transmission error, the method further includes:
the first SEPP verifies the integrity of the first indication information based on the first signature, to obtain a verification result.

That the first SEPP performs the error response operation corresponding to the transmission error includes:
in the case that the verification result is successful verification, the first SEPP performs the error response operation corresponding to the transmission error.

In this implementation, when ProblemDetails is reused, integrity protection may be further performed on an IE that needs integrity protection and that is in ProblemDetails, for example, the first indication information, thereby helping improve communication reliability and security.

In a possible design, that the first SEPP receives the first indication information from the IPX includes:
the first SEPP receives a second message from the IPX, where the second message includes the first indication information and first reformatted data reformattedData; and
obtains, based on the first reformattedData, the first indication information by parsing the second message.

In this implementation, the first reformattedData may indicate that the second message includes the first indication information, to help improve efficiency of parsing the second message.

In a possible design, the first reformattedData includes one or more of the following information: N32-f context identifier n32fContextID, message identifier messageId, or authorized IPX identifier authorizedIpxId, where n32fContextID is an identifier of the first N32-f context, messageId is an identifier of the first HTTP message, and authorizedIpxId is an identifier of the IPX.

Obtaining, based on the first reformattedData, the first indication information by parsing the second message includes:
in the case that n32fContextID in the first reformattedData is the same as n32fContextID in the first HTTP message, the first SEPP obtains the first indication information in the second message by parsing the second message;
in the case that messageId in the first reformattedData is the same as messageId in the first HTTP message, the first SEPP obtains the first indication information in the second message by parsing the second message; or
in the case that authorizedIpxId in the first reformattedData is the same as authorizedIpxId in the first HTTP message, the first SEPP obtains the first indication information in the second message by parsing the second message.

In a possible design, the first reformattedData does not include one or more of the following information: a ciphertext ciphertext or a Json payload JsonPayload, where ciphertext includes information obtained by encrypting, according to the encryption policy in the first N32-f context, the IE that requires encryption in the first HTTP message, and JsonPayload includes an IE that requires integrity protection in the first HTTP message; and the IE that requires integrity protection in the first HTTP message is determined according to an integrity protection policy in the first N32-f context.

The obtaining, based on the first reformattedData, the first indication information by parsing the second message includes:
in the case that the first reformattedData does not include ciphertext, the first SEPP obtains the first indication information in the second message by parsing the second message; or
in the case that the first reformattedData does not include JsonPayload, the first SEPP obtains the first indication information in the second message by parsing the second message.

According to a second aspect, this application provides a communication method, performed by an IPX. The IPX may be the IPX, or may be a unit or module (for example, a chip) that has a corresponding function and that is in the IPX. In the method, the IPX receives a protected first hypertext transfer protocol HTTP message from a first SEPP, where the protected first HTTP message is obtained by performing security protection on the first HTTP message based on a first N32-f context between the first SEPP and a second SEPP; and the IPX sends first indication information to the first SEPP, where the first indication information indicates a transmission error of the first HTTP message. The transmission error includes one or more of the following:
a first information element IE is encrypted in the first HTTP message while the IPX requires that the first information element not be encrypted;
a second IE is not encrypted in the first HTTP message while the IPX requires that the second IE be encrypted;
a network topology of a public land mobile network PLMN in which the first SEPP is located is not hidden; or
a message format of the first HTTP message is not a first format.

In a possible design, that the IPX sends the first indication information to the first SEPP includes:
the IPX determines whether the first IE in the protected first HTTP message is encrypted, and when the first IE is encrypted, the IPX sends the first indication information to the first SEPP, where the first indication information indicates that the first IE is encrypted in the protected first HTTP message while the IPX requires that the first IE not be encrypted;
the IPX determines whether the second IE in the protected first HTTP message is encrypted, and when the second IE is not encrypted, the IPX sends the first indication information to the first SEPP, where the first indication information indicates that the second IE is not encrypted in the protected first HTTP message while the IPX requires that the second IE be encrypted;
when the IPX determines that the protected first HTTP message includes a plaintext identifier of a first network function NF, the IPX sends the first indication information to the first SEPP, where the first indication information indicates that the network topology of the PLMN in which the first SEPP is located is not hidden, where the first NF is a network element requesting a roaming service; or
the IPX determines whether a name of the message format of the protected first HTTP message in a message header is the first format, and when the name of the message format of the protected first HTTP message in the message header is not the first format, the IPX sends the first indication information to the first SEPP, where the first indication information indicates that the message format of the protected first HTTP message is not the first format.

In a possible design, the method further includes:
the IPX receives a re-protected first HTTP message from the first SEPP, where the re-protected first HTTP message is obtained by performing security protection on the first HTTP message based on a second N32-f context between the first SEPP and the second SEPP, and the second N32-f context is obtained by re-exchanging, by the first SEPP, a parameter with the second SEPP; and
the IPX sends the re-protected first HTTP message to the second SEPP.

In a possible design, the method further includes:
the IPX receives a protected second HTTP message from the first SEPP, where the protected second HTTP message is obtained by performing security protection on a second HTTP message based on the first N32-f context, and the second HTTP message is obtained by modifying the first HTTP message based on the first indication information; and
the IPX sends the protected second HTTP message to the second SEPP.

According to a third aspect, this application provides a communication apparatus. The communication apparatus may be a first SEPP, or may be a unit or module (for example, a chip) that has a corresponding function and that is in the first SEPP. The communication apparatus includes:
a processing unit, configured to perform security protection on a first hypertext transfer protocol HTTP message by using a first N32-f context between the first SEPP and a second SEPP, to obtain a protected first HTTP message, where the first HTTP message is used to implement a roaming service between the first SEPP and the second SEPP; and
a transceiver unit, configured to send the protected first HTTP message to an internet protocol exchange service IPX, where the IPX is used to route a message sent by the first SEPP to the second SEPP.

The transceiver unit is configured to receive first indication information from the IPX, where the first indication information indicates a transmission error of the first HTTP message.

The processing unit is configured to perform an error response operation corresponding to the transmission error.

In a possible design, the error response operation includes any one of the following:
the first SEPP re-exchanges a parameter with the second SEPP to obtain a second N32-f context between the first SEPP and the second SEPP, the first SEPP performs security protection on the first HTTP message by using the second N32-f context, to obtain a re-protected first HTTP message, and the first SEPP sends the re-protected first HTTP message to the IPX; or
the first SEPP modifies the first HTTP message based on the first indication information, to obtain a second HTTP message, the first SEPP performs security protection on the second HTTP message by using the first N32-f context, to obtain a protected second HTTP message, and the first SEPP sends the protected second HTTP message to the IPX.

In a possible design, that the first indication information indicates the transmission error of the first HTTP message includes:
the first indication information indicates that a first information element IE is encrypted in the first HTTP message while the IPX requires that the first information element not be encrypted; or
the first indication information indicates that a second IE is not encrypted in the first HTTP message while the IPX requires that the second IE be encrypted.

In a possible design, an encryption policy that is for the first IE and that is in the first N32-f context is that the first IE is encrypted, and an encryption policy that is for the first IE and that is in the second N32-f context is that the first IE is not encrypted; or
an encryption policy that is for the second IE and that is in the first N32-f context is that the second IE is not encrypted, and an encryption policy that is for the second IE and that is in the second N32-f context is that the second IE is encrypted.

In a possible design, the transceiver unit is configured to:
send a parameter exchange request to the second SEPP, where an encryption policy that is for the first IE and that is included in the parameter exchange request is that the first IE is not encrypted; and
receive a parameter exchange response from the second SEPP, where an encryption policy that is for the first IE and that is included in the parameter exchange response is that the first IE is not encrypted; or
send a parameter exchange request to the second SEPP, where an encryption policy that is for the second IE and that is included in the parameter exchange request is that the second IE is encrypted; and
receive a parameter exchange response from the second SEPP, where an encryption policy that is for the second IE and that is included in the parameter exchange response is that the second IE is encrypted.

In a possible design, that the first indication information indicates the transmission error of the first HTTP message includes:
when the protected first HTTP message includes a plaintext identifier of a first network function NF, the first indication information indicates that a network topology of a public land mobile network PLMN in which the first SEPP is located is not hidden, where the first NF is a network element requesting the roaming service.

In a possible design, the processing unit is configured to:
anonymize the plaintext identifier of the first NF in the first HTTP message, to obtain an anonymous identifier of the first NF; and
replace, with the anonymous identifier of the first NF, the plaintext identifier of the first NF in the first HTTP message, to obtain the second HTTP message.

In a possible design, that the first indication information indicates the transmission error of the first HTTP message includes:
the first indication information indicates that a message format of the first HTTP message is not a first format.

In a possible design, the processing unit is configured to:
convert the message format of the first HTTP message into the first format, to obtain the second HTTP message.

In a possible design, the transceiver unit is configured to:
receive a first message from the IPX, where the first message includes problem details ProblemDetails, and ProblemDetails includes the first indication information.

In a possible design, ProblemDetails further includes a first signature corresponding to the first indication information, or the first message further includes a first signature corresponding to the first indication information, where the first signature is used to protect integrity of the first indication information.

Before performing the error response operation corresponding to the transmission error, the processing unit is configured to:
verify the integrity of the first indication information based on the first signature, to obtain a verification result.

When performing the error response operation corresponding to the transmission error, the processing unit is configured to:
in the case that the verification result is successful verification, perform the error response operation corresponding to the transmission error.

In a possible design,
the transceiver unit is configured to receive a second message from the IPX, where the second message includes the first indication information and first reformatted data reformattedData; and
the processing unit is configured to obtain, based on the first reformattedData, the first indication information by parsing the second message.

In a possible design, the first reformattedData includes one or more of the following information: N32-f context identifier n32fContextID, message identifier messageId, or authorized IPX identifier authorizedIpxId, where n32fContextID is an identifier of the first N32-f context, messageId is an identifier of the first HTTP message, and authorizedIpxId is an identifier of the IPX.

The obtaining, based on the first reformattedData, the first indication information by parsing the second message includes:
in the case that n32fContextID in the first reformattedData is the same as n32fContextID in the first HTTP message, the first SEPP obtains the first indication information in the second message by parsing the second message;
in the case that messageId in the first reformattedData is the same as messageId in the first HTTP message, the first SEPP obtains the first indication information in the second message by parsing the second message; or
in the case that authorizedIpxId in the first reformattedData is the same as authorizedIpxId in the first HTTP message, the first SEPP obtains the first indication information in the second message by parsing the second message.

In a possible design, the first reformattedData does not include one or more of the following information: a ciphertext ciphertext or a Json payload JsonPayload, where ciphertext includes information obtained by encrypting, according to the encryption policy in the first N32-f context, the IE that requires encryption in the first HTTP message, and JsonPayload includes an IE that requires integrity protection in the first HTTP message; and the IE that requires integrity protection in the first HTTP message is determined according to an integrity protection policy in the first N32-f context.

The obtaining, based on the first reformattedData, the first indication information by parsing the second message includes:
in the case that the first reformattedData does not include ciphertext, the first SEPP obtains the first indication information in the second message by parsing the second message; or
in the case that the first reformattedData does not include JsonPayload, the first SEPP obtains the first indication information in the second message by parsing the second message.

According to a fourth aspect, this application provides a communication apparatus. The communication apparatus may be an IPX, or may be a unit or module (for example, a chip) that has a corresponding function and that is in the IPX. The communication apparatus includes:
a transceiver unit, configured to receive a protected first hypertext transfer protocol HTTP message from a first SEPP, where the protected first HTTP message is obtained by performing security protection on the first HTTP message based on a first N32-f context between the first SEPP and a second SEPP.

The transceiver unit is configured to send first indication information to the first SEPP, where the first indication information indicates a transmission error of the first HTTP message.

The transmission error includes one or more of the following:
a first information element IE is encrypted in the first HTTP message while the IPX requires that the first information element not be encrypted;
a second IE is not encrypted in the first HTTP message while the IPX requires that the second IE be encrypted;
a network topology of a public land mobile network PLMN in which the first SEPP is located is not hidden; or
a message format of the first HTTP message is not a first format.

In another possible design, the communication apparatus further includes a processing unit.

The processing unit is configured to determine whether a first IE in the protected first HTTP message is encrypted, and when the first IE is encrypted, the transceiver unit is configured to send the first indication information to the first SEPP, where the first indication information indicates that the first IE is encrypted in the protected first HTTP message while the IPX requires that the first IE not be encrypted;
when processing unit is configured to determine whether a second IE in the protected first HTTP message is encrypted, and when the second IE is not encrypted, the transceiver unit is configured to send the first indication information to the first SEPP, where the first indication information indicates that the second IE is not encrypted in the protected first HTTP message while the IPX requires that the second IE be encrypted;
when the IPX determines that the protected first HTTP message includes a plaintext identifier of a first network function NF, the IPX sends the first indication information to the first SEPP, where the first indication information indicates that the network topology of the PLMN in which the first SEPP is located is not hidden, where the first NF is a network element requesting a roaming service; or
the processing unit is configured to determine whether a name of a message format is of the protected first HTTP message in a message header is the first format, and when the name of the message format of the protected first HTTP message in the message header is not the first format, the transceiver unit is configured to send the first indication information to the first SEPP, where the first indication information indicates that the message format of the protected first HTTP message is not the first format.

In a possible design, the transceiver unit is configured to:
receive a re-protected first HTTP message from the first SEPP, where the re-protected first HTTP message is obtained by performing security protection on the first HTTP message based on a second N32-f context between the first SEPP and the second SEPP, and the second N32-f context is obtained by re-exchanging, by the first SEPP, a parameter with the second SEPP; and
send the re-protected first HTTP message to the second SEPP.

In a possible design, the transceiver unit is configured to:
receive a protected second HTTP message from the first SEPP, where the protected second HTTP message is obtained by performing security protection on a second HTTP message based on the first N32-f context, and the second HTTP message is obtained by modifying the first HTTP message based on the first indication information; and
send the protected second HTTP message to the second SEPP.

According to a fifth aspect, this application provides a communication apparatus. The communication apparatus includes a processor, and the processor is configured to execute a computer program, so that the communication apparatus performs the method according to any one of the first aspect or the second aspect.

In a possible design, the communication apparatus may be a chip or a device including the chip implementing the method in the first aspect or the second aspect.

In a possible design, the communication apparatus further includes a transceiver. The processor is coupled to the transceiver.

In a possible design, the communication apparatus further includes a memory. The processor is coupled to the memory, the memory stores a computer program, and the processor is further configured to invoke the computer program in the memory. Optionally, the processor and the memory may alternatively be integrated together.

According to a sixth aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus, and the processor is configured to implement the method according to any one of the first aspect or the second aspect by using a logic circuit or by executing code instructions.

According to a seventh aspect, this application provides a computer-readable storage medium. The storage medium stores a computer program or instructions. When the computer program or the instructions are executed by a computer, the method according to any one of the first aspect or the second aspect is implemented.

According to an eighth aspect, this application provides a computer program product. When a computer reads and executes the computer program product, the computer is caused to perform the method according to any one of the first aspect or the second aspect.

According to a ninth aspect, this application provides a communication system. The communication system includes a communication apparatus configured to implement the method according to any one of the first aspect, and includes a communication apparatus configured to implement the method according to any one of the second aspect.

For beneficial effects of the third aspect to the ninth aspect, refer to the beneficial effects of the first aspect. Details are not described herein.

### BRIEF DESCRIPTION OF DRAWINGS

FIG. 1a is a diagram of an architecture of a communication system to which an embodiment of this application is applied;
FIG. 1b is a diagram of a roaming architecture of a 5G system;
FIG. 2a is a schematic flowchart of protection policy negotiation;
FIG. 2b is a schematic flowchart of interrupting an N32 connection;
FIG. 3 is a diagram of a PRINS;
FIG. 4 is a schematic flowchart of N32-f message transfer;
FIG. 5 is a diagram of formats of reformattedData and modificationsBlock;
FIG. 6 is a diagram of a format of ProblemDetails;
FIG. 7 is a schematic interaction flowchart of a communication method according to an embodiment of this application;
FIG. 8 is another schematic interaction flowchart of a communication method according to an embodiment of this application;
FIG. 9 is still another schematic interaction flowchart of a communication method according to an embodiment of this application;
FIG. 10 is a diagram of a structure of a possible communication apparatus according to an embodiment of this application; and
FIG. 11 is a diagram of a structure of a possible communication apparatus according to an embodiment of this application.

### DESCRIPTION OF EMBODIMENTS

The following further describes specific embodiments of this application in detail with reference to accompanying drawings.

Terms "first", "second", and the like in the specification, claims, and accompanying drawings of this application are for distinguishing between different objects, but are not for describing a specific sequence. In addition, terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification means that specific features, structures, or characteristics described in combination with embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one piece (item)" means one or more, "a plurality of" means two or more, "at least two pieces (items)" means two or three or more, and "and/or" is used to describe an association relationship between associated objects and indicates that three relationships may exist. For example, "A and/or B" may indicate three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one (piece) of a, b, or c may indicate a, b, c, "a and b", "a and c", "b and c", or "a, b, and c", where a, b, and c may be singular or plural.

To better understand embodiments of this application, the following first describes a system architecture mentioned in embodiments of this application.

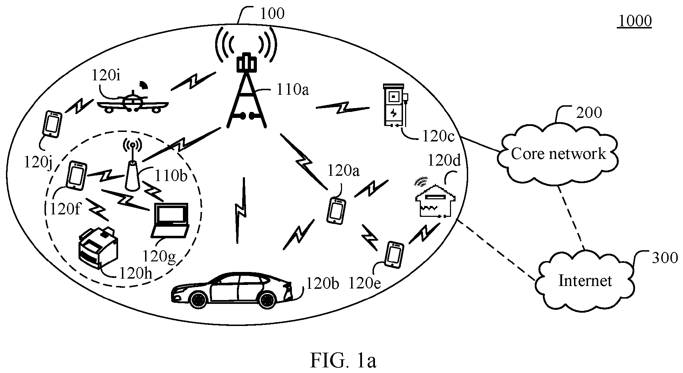

FIG. 1a is a diagram of an architecture of a communication system to which an embodiment of this application is applied. As shown in FIG. 1a, a communication system 1000 includes a radio access network (radio access network, RAN) 100 and a core network (core network, CN) 200. Optionally, the communication system 1000 may further include an internet 300. The RAN 100 includes at least one RAN node (for example, 110a and 110b in FIG. 1a, which are collectively referred to as 110) and at least one terminal (for example, 120a to 120j in FIG. 1a, which are collectively referred to as 120). The RAN 100 may further include another RAN node, for example, a wireless relay device and/or a wireless backhaul device (not shown in FIG. 1a). The terminal 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a core network logical function and a radio access network logical function.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The RAN node 110 may also be sometimes referred to as an access network device, a RAN entity, an access node, or the like, and forms a part of the communication system, to help the terminal implement radio access. A plurality of RAN nodes 110 in the communication system 1000 may be a same type of nodes, or may be different types of nodes. In some scenarios, roles of the RAN node 110 and the terminal 120 are relative to each other. For example, the network element 120i in FIG. 1a may be a helicopter or an uncrewed aerial vehicle, and may be configured as a mobile base station. For the terminal 120j that accesses the RAN 100 through the network element 1201, the network element 120i is a base station. However, for the base station 110a, the network element 120i is a terminal. Both the RAN node 110 and the terminal 120 are sometimes referred to as communication apparatuses. For example, the base stations 110a and 110b in FIG. 1a may be understood as communication apparatuses having a base station function, and the terminals 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1a), a micro base station or an indoor station (for example, 110b in FIG. 1a), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the RAN node in this application may alternatively be implemented by using a software function running on hardware, or may be implemented by using a virtualization function instantiated on a platform (for example, a cloud platform). The RAN node in this application may alternatively be a logical node, a logical module, or software that can implement all or a part of the functions of the RAN node.

In another possible scenario, the plurality of RAN nodes coordinate to assist the terminal in implementing the radio access, and different RAN nodes separately implement a part of base station functions. For example, the RAN node may be a central unit (central unit, CU), a distributed unit (distributed unit, DU), a CU-control plane (control plane, CP), a CU-user plane (user plane, UP), a radio unit (radio unit, RU), or the like. Herein, the CU completes functions of a radio resource control protocol and a packet data convergence protocol (packet data convergence protocol, PDCP) of a base station, and may further complete functions of a service data adaptation protocol (service data adaptation protocol, SDAP); and the DU completes functions of a radio link control layer and a medium access control (medium access control, MAC) layer of the base station, and may further complete a part or all of functions of a physical layer. For specific descriptions of the foregoing protocol layers, refer to technical specifications related to the 3rd generation partnership project (3rd generation partnership project, 3GPP). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

Optionally, the RAN node may also have a different expression, for example, an access network device. In this application, unless otherwise specified, the access network device is used for expression.

In different systems, the CU (or the CU-CP and the CU-UP), the DU, or the RU may also have a different name, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP or the CU-UP), the DU, and the RU in this application may be implemented by using a software module, a hardware module, or a combination of the software module and the hardware module.

The terminal may also be referred to as a terminal device, user equipment (user equipment, UE), a mobile station, a mobile terminal, mobile equipment (mobile equipment, ME), or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A device form of the terminal is not limited in embodiments of this application.

The core network may include one or more function entities (or referred to as core network elements, network elements, entities, network functions, logical network elements, or the like), for example, a network slice selection function (network slice selection function, NSSF), a network exposure function (network exposure function, NEF), a network repository function (network function repository function, NRF), a policy control function (policy control function, PCF), unified data management (unified data management, UDM), an access and mobility management function (access and mobility management function, AMF), an authentication server function (authentication server function, AUSF), and a session management function (session management function, SMF).

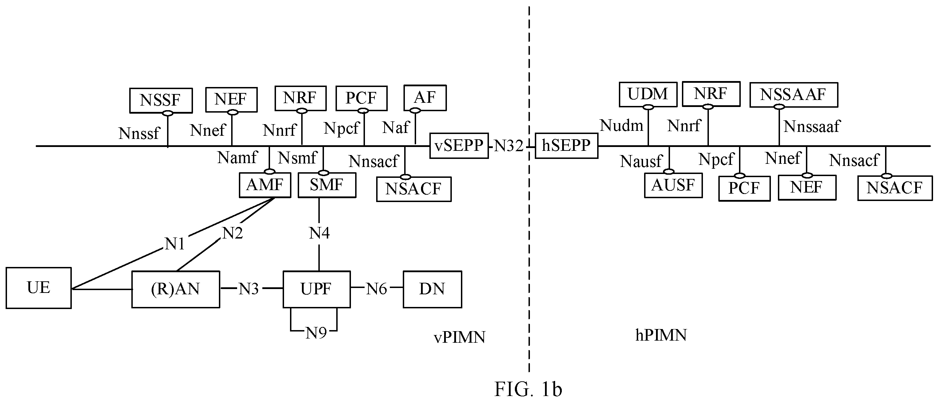

For example, FIG. 1b is a diagram of a roaming architecture of a 5G system. As shown in FIG. 1b, the communication system includes two public land mobile networks (public land mobile networks, PLMNs): a visited public land mobile network (visited public land mobile network, vPLMN) and a home public land mobile network (home public land mobile network, hPLMN). Each PLMN includes one security edge protection proxy (security edge protection proxy, SEPP). A SEPP in the vPLMN is a visited security edge protection proxy (visited security edge protection proxy, vSEPP), and a SEPP in the hPLMN is a home security edge protection proxy (home security edge protection proxy, hSEPP).

In this application, the vSEPP may be alternatively described as a consumer's SEPP (consumer's SEPP, cSEPP), and the hSEPP may be alternatively described as a producer's SEPP (producer's SEPP, pSEPP).

It should be understood that the SEPP is a network element that supports message filtering, message supervision, and topology hiding. For example, functions of the SEPP include: 1. protecting a message between a cNF and a pNF (that is, setting up a TLS or PRINS connection and performing anti-spoofing based on a PLMN ID); and 2. providing the message filtering and supervision, for example, a receiver SEPP may verify whether a sender SEPP is authorized to use the PLMN ID in an N32 message, discard an N32 signaling message in an incorrect format, reject to receive a JSON block including "encBlockIndex", or have a function like the topology hiding.

An N32 interface is used to implement a function of transferring a roaming message between SEPPs in different PLMNs. Based on the N32 interface, a consumer's network function (consumer's network function, cNF) in the vPLMN may send a roaming message to a pSEPP in the hPLMN through the cSEPP, and the pSEPP forwards the roaming message to a producer's network element (producer's network function, pNF), to transfer a cross-PLMN inter-network element roaming message. For example, the cNF may be an AMF in the vPLMN, and the pNF may be an AUSF in the hPLMN. In a primary authentication procedure, the AMF in the vPLMN needs to send a user authentication request message to the AUSF in the hPLMN based on the N32 interface and through the SEPP proxy.

Two logical interfaces are needed to transfer the roaming message between the SEPPs based on the N32 interface: N32-c and N32-f. The N32-c is used to manage N32 connections, and the N32-f is used to transfer roaming messages between the cSEPP and the pSEPP. The following separately describes concepts related to the N32-c and the N32-f. Details are not described herein.

It may be understood that for other network elements/devices and interfaces shown in FIG. 1b, refer to descriptions in TS 23.501. Details are not described herein in this application.

It should be noted that the foregoing function entities are merely names, and the names do not constitute any limitation on the entities. For example, the session management function may alternatively be replaced with a "session management function entity" or another name. In addition, the session management function entity may alternatively correspond to an entity that includes another function in addition to the session management function. A user plane function may alternatively be replaced with a "user plane function entity" or another name. In addition, the user plane function entity may alternatively correspond to an entity that includes another function in addition to the user plane function. Descriptions are uniformly provided herein. Details are not described below again.

It should be noted that names of messages between network elements, names of parameters in the messages, or the like in the following embodiments of this application are merely examples, and there may be other names during specific implementation. This is not specifically limited in embodiments of this application.

In this application, "sending information to... (a terminal)" may be understood as that a destination end of the information is the terminal, and may include directly or indirectly sending the information to the terminal. "Receiving information from... (the terminal)" may be understood as that a source end of the information is the terminal, and may include directly or indirectly receiving the information from the terminal. Necessary processing, for example, a format change, may be performed on information between the source end and the destination end for sending the information. However, the destination end may understand valid information from the source end. A similar expression in this application may be understood similarly. Details are not described herein.

It should be understood that the SEPP in embodiments of this application may be any one of the foregoing devices or a chip. This is not specifically limited herein. Regardless of serving as the device or the chip, the SEPP may be manufactured, sold, or used as an independent product. In this embodiment and subsequent embodiments, only the SEPP is used as an example for description.

It should be understood that, in embodiments of this application, an apparatus configured to implement functions of an IPX may be the IPX, or may be an apparatus that can support the IPX in implementing the function, for example, a chip system, or a combined device or component that can implement the function of the IPX. The apparatus may be mounted in the IPX. In this embodiment of this application, the chip system may include a chip, or may include a chip and another discrete device. In this embodiment and subsequent embodiments, only the IPX is used as an example for description.

The IPX is a cross-service provider network node, and can connect a mobile network operator (mobile network operator, MNO), that is, a PLMN operator, a fixed network operator (fixed network operator, FNO), an internet service provider (internet service provider, ISP), and the like. The IPX is mainly for providing a routing service, a modification service, a monitoring service, and the like of a roaming message. In this application, the IPX may further provide more extended services. For example, the IPX may determine whether a message that was expected to be encrypted for transmission is transmitted in plaintext, determine whether a message that was expected to be transmitted in plaintext is encrypted, determine whether an N32 connection can be set up, determine whether an NF message can be forwarded, and the like. If the determining fails, the IPX may generate an error message, and send the error message to a SEPP.

It should be noted that the IPX in embodiments of this application may alternatively be a roaming hub (roaming hub, RH). This is because the RH may be deployed on the IPX and the RH implements roaming services, or the RH may directly replace the IPX to implement its functions in the future. However, for ease of description, the following mainly uses the IPX as an example for schematic description.

The following explains and describes related technical features mentioned in embodiments of this application. It should be noted that the explanations are intended to make embodiments of this application more understandable, but should not be construed as any limitation on the protection scope required by this application.

### 1. Pre-configuration profile

An operator to which a first SEPP belongs may sign a contract with an operator to which a second SEPP belongs. The contract corresponds to a pre-configuration profile 1 (or referred to as that the pre-configuration profile 1 is related to the signed contract). The pre-configuration profile 1 indicates specific IEs that require encryption and/or integrity protection, and specific IEs that can be modified by an IPX. Generally, a protection policy in the pre-configuration profile 1 is more flexible than a protection policy negotiated in an N32-c handshake procedure. For example, the protection policy in the pre-configuration profile 1 may indicate that a subscription permanent identifier (subscription permanent identifier, SUPI) may be encrypted or may not be encrypted, and the protection policy negotiated in the N32-c handshake procedure needs to explicitly indicate that the SUPI needs to be encrypted. In other words, the protection policy negotiated in the N32-c handshake procedure is restricted by the pre-configuration profile 1, or the protection policy negotiated in the N32-c handshake procedure needs to meet/not exceed requirements in the pre-configuration profile 1.

The operator to which the first SEPP belongs may also sign a contact with a roaming intermediary service provider that deploys a first IPX. The contract corresponds to a pre-configuration profile 2. The pre-configuration profile 2 includes requirements of the first IPX, for example, an encryption policy required by the first IPX (for example, the first IPX requires that specific IEs be encrypted and specific IEs not be encrypted), a modification policy required by the first IPX (for example, the first IPX requires that specific IEs be modifiable), a service policy of the first IPX (for example, the first IPX needs to provide specific services), and a check policy of the first IPX (for example, a message format required by the first IPX, whether a network topology is required to be hidden, and forwarding of messages related to specific IEs being allowed/not allowed).

Similarly, the operator to which the second SEPP belongs may also sign a contact with a roaming intermediary service provider that deploys a second IPX. The contract corresponds to a pre-configuration profile 3. The pre-configuration profile 3 includes requirements of the second IPX, for example, an encryption policy required by the second IPX (for example, the second IPX requires that specific IEs be encrypted and specific IEs not be encrypted), a modification policy required by the second IPX (for example, the second IPX requires that specific IEs be modifiable), a service policy of the second IPX (for example, the second IPX needs to provide specific services), and a check policy of the second IPX (for example, a message format required by the second IPX, whether a network topology is required to be hidden, and forwarding of messages related to specific IEs being allowed/not allowed).

### 2. N32-c handshake procedure and N32-f context

A SEPP manages an N32 connection by using an N32-c handshake procedure. The N32-c handshake procedure mainly includes a security capability negotiation procedure, a parameter exchange procedure, an N32-f context termination procedure (the N32-f context termination procedure is used to terminate N32-f message transfer and delete an N32-f context), and the like. After the security capability negotiation procedure and the parameter exchange procedure are performed between a first SEPP and a second SEPP, an N32-f context may be generated. The first SEPP and the second SEPP may separately store the N32-f context. Therefore, subsequently, the first SEPP may perform security protection, based on the generated N32-f context, on a roaming message sent by the first SEPP, or the second SEPP may security protect, based on the generated N32-f context, a roaming message sent by the first SEPP.

The security capability negotiation procedure is used to negotiate a security capability supported by the SEPP, that is, a protocol for N32 interconnect security (protocol for N32 interconnect security, PRINS) or transport layer security (transport layer security, TLS) protocol. When there is no IP exchange service (IP exchange service, IPX) deployed by a roaming intermediary service provider between SEPPs, the TLS should be used for an N32-f connection between the SEPPs. When the roaming intermediary service provider deploys the IPX, and the IPX provides only an IP routing service, the TLS or the PRINS may be selected. When the roaming intermediary service provider deploys the IPX, and the IPX provides an IP routing service (referred to as a routing service for short), a roaming message modification service (referred to as a modification service for short), and a roaming message monitoring service (referred to as a monitoring service for short), the PRINS should be used. This application mainly focuses on a scenario in which the roaming intermediary service provider deploys the IPX, and the IPX provides the routing service, the modification service, and the monitoring service. Therefore, the following emphatically describes a PRINS procedure.

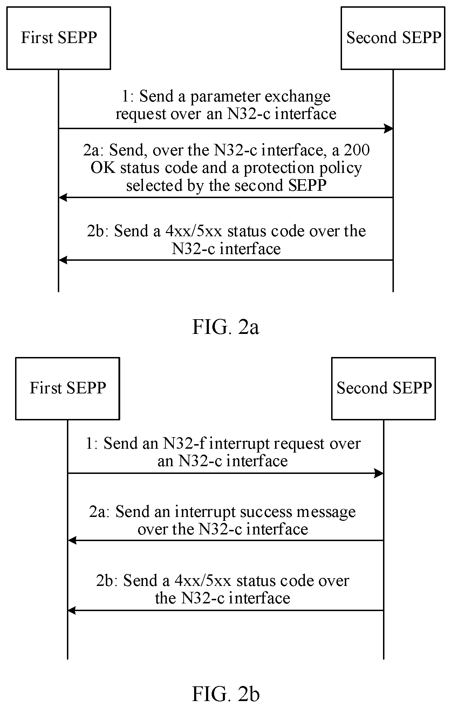

The parameter exchange procedure includes three sub-procedures: cipher suite negotiation (or referred to as negotiating a cipher suite), protection policy negotiation (or referred to as negotiating a protection policy), and a security information list exchange procedure. In the cipher suite negotiation procedure, a cipher suite used for roaming message protection is negotiated, and N32-f context IDs of both parties (for example, the first SEPP and the second SEPP) are exchanged. In the protection policy negotiation procedure, a data-type encryption policy (to be specific, indicating that a specific type of data needs encryption protection) and modification policy (to be specific, indicating that a specific type of data that can be modified by the IPX) are negotiated. The protection policy negotiation procedure is emphatically described herein, as shown in FIG. 2a.

Step 1: A first SEPP sends a parameter exchange request to a second SEPP over an N32-c interface, where the parameter exchange request carries an information element (information element, IE) referred to as "SecParamExchReqData", the IE includes a protection policy, and the protection policy includes a type list of an IE that needs encryption and/or integrity protection in N32-f (that is, an encryption policy), a modification policy (indicating that specific IEs can be modified), and the like.

Step 2a: The second SEPP sends, to the first SEPP over the N32-c interface, a 200 OK status code and a protection policy selected by the second SEPP, where the 200 OK status code indicates that processing of the parameter exchange request is successful. Generally, the protection policy selected by the second SEPP may be equal to the protection policy carried in the parameter exchange request, or the protection policy selected by the second SEPP may be a subset of the protection policy carried in the parameter exchange request.

Step 2b: The second SEPP sends a 4XX/5XX status code to the first SEPP over the N32-c interface, where the 4XX/5XX status code indicates that processing of the parameter exchange request fails.

It should be understood that, after the N32-c handshake procedure is completed, the N32-f context may be generated. The N32-f context includes the protection policy, the modification policy, and the like that are negotiated in the parameter exchange procedure.

### 3. Interrupt an N32 connection

FIG. 2b shows a procedure of interrupting an N32 connection.

Step 1: A first SEPP sends an n32-f interrupt request to a second SEPP over an N32-c interface, where the n32-f interrupt request carries an IE referred to as "N32-f context id". It should be understood that, after receiving the n32-f interrupt request, the second SEPP stops sending all messages that were expected to be sent to the first SEPP over N32-f, and deletes a security context corresponding to N32-f context id. For the first SEPP, the first SEPP also stops sending all messages that were expected to be sent to the second SEPP over N32-f, and deletes a security context corresponding to local N32-f context id.

Step 2a: The second SEPP sends an interrupt success message to the first SEPP over the N32-c interface, where the message carries "N32-f context id".

Step 2b: The second SEPP sends a 4XX/5XX status code to the first SEPP over the N32-c interface, where the 4XX/5XX status code indicates that processing of the n32-f interrupt request fails.

### 4. N32-f message transfer procedure

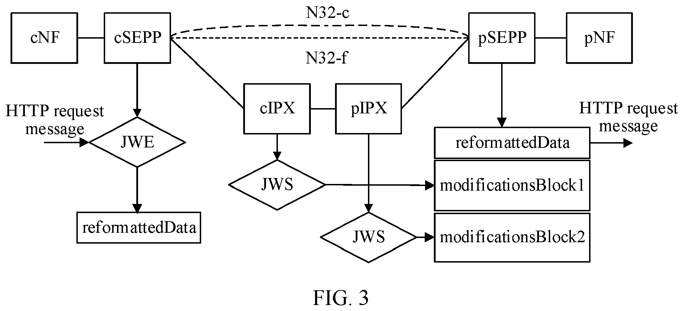

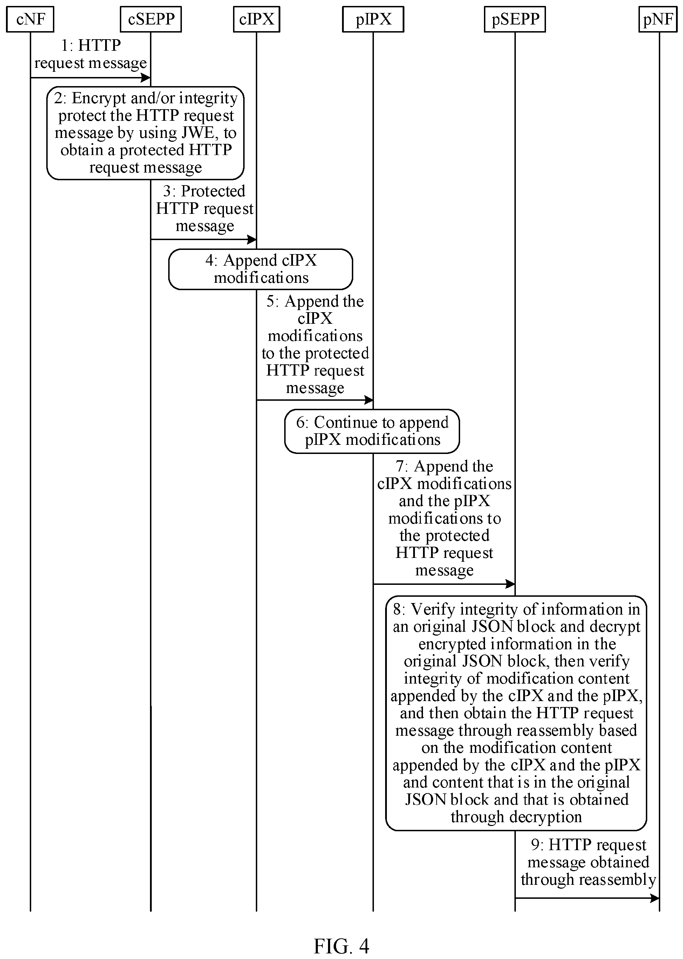

Herein, a PRINS procedure is mainly described. A PRINS overview and an N32-f message transfer procedure are respectively shown in FIG. 3 and FIG. 4. As shown in FIG. 3, a PRINS includes a cNF, a cSEPP, a consumer's IPX (consumer's IPX, cIPX), a producer's IPX (producer's IPX, pIPX), a pSEPP, and a pNF. The cNF and the cSEPP belong to vPLMN, and the pSEPP and the pNF belong to a pPLMN. The following describes the PRINS procedure mainly by using a roaming procedure from the cSEPP to the pSEPP. A roaming procedure from the pSEPP to the cSEPP is a symmetric procedure of the roaming procedure from the cSEPP to the pSEPP. Details are not described below. As shown in FIG. 4:

Step 1: A cNF sends a hypertext transfer protocol (hypertext transfer protocol, HTTP) request message to a cSEPP. Correspondingly, the cSEPP receives the HTTP request message from the cNF.

An example in which the HTTP request message is a PDU session management context create (Nsmf_PDUSession_CreateSMContext) request message sent by an AMF in vPLMN to an SMF in an hPLMN in a protocol data unit (protocol data unit, PDU) session establishment procedure is used. The AMF in vPLMN sends the PDU session management context create request message to the cSEPP. The PDU session management context create request message carries parameters such as SUPI, data network name (data network name, DNN), and user location information (UE Location Information), and all these parameters may be referred to as information elements (information elements, IEs).

Step 2: The cSEPP encrypt and/or integrity protect the HTTP request message using JWE, to obtain a protected HTTP request message.

It should be understood that a function of the cSEPP is to protect the HTTP request message from being leaked and tampered with during transmission. Therefore, after receiving the HTTP request message, the cSEPP may first rewrite the HTTP request message as a JavaScript object notation (JavaScript object notation, JSON) block (for ease of subsequent JSON web encryption (JSON web encryption, JWE) protection), where JSON is a format for describing information. Then, the cSEPP determines, according to the protection policy negotiated in the foregoing N32-c handshake procedure, that specific IEs in the HTTP request message requires encryption protection and specific IEs in the HTTP request message requires integrity protection (also be referred to as integrity protection for short). Therefore, the cSEPP may encrypt, by using the JWE, the IEs that requires encryption protection, and integrity protect the IEs that requires integrity protection, to generate the protected HTTP request message. Herein, the protected HTTP request message generated in step 2 may be understood as that the HTTP message includes a JSON block (described as an original JSON block subsequently for ease of differentiation, where the original JSON block is reformattedData). The original JSON block includes a formatted request message, and information in the original JSON block is protected by using the JWE.

For example, if the protection policy negotiated in the N32-c handshake procedure is that the user location information needs encryption protection, and the SUPI and the DNN requires integrity protection, the cSEPP encrypts the user location information based on the JWE, and generates integrity protection information for both the SUPI and the DNN.

Step 3: The cSEPP sends the protected HTTP request message to a cIPX.

It should be noted that the cIPX is deployed by a roaming intermediary service provider that provides a roaming service for the cSEPP (whether the cIPX is deployed is optional, and depends on whether the vPLMN needs the roaming intermediary service provider to provide the roaming service), and the cIPX may be used to provide a routing service, a modification service, and a monitoring service.

Step 4: The cIPX appends cIPX modifications.

It should be understood that, to prevent the cIPX from randomly modifying a roaming message, the cIPX needs to indirectly modify the roaming message by appending a JSON block (for example, the JSON block is modificationsBlock1) to the original JSON block (that is, the JSON block generated in step 2) in the protected HTTP request message. A specific method is as follows: The cIPX places a modification instruction, a modification location, and a modification value in the JSON block, where the JSON block is integrity protected by the cIPX based on a JSON web page signature (JSON web signature, JWS). Subsequently, after verifying integrity of the JSON block, pSEPP modifies an IE at a corresponding location based on the modification policy negotiated in the N32-c handshake procedure and the modification instruction.

For example, if the cIPX expects to modify a value of an IE (for example, the SUPI) in the PDU session management context create request message, the cIPX needs to write, into the JSON block, a specific location of the to-be-modified IE, and a modified value of the IE, and appends the JSON block to the original JSON block. For example, assuming that an SUPI in the original JSON block is SUPI 1, the cIPX indicates that a value of the SUPI needs to be modified to SUPI 2.

Step 5: The cIPX sends, to a pIPX, a protected HTTP request message to which the cIPX modifications are appended.

It should be noted that, similar to the cIPX, the pIPX is deployed by a roaming intermediary service provider that provides a roaming service for the pSEPP (whether the pIPX is deployed is also optional, and depends on whether the hPLMN needs the roaming intermediary service provider to provide the roaming service), and the pIPX may also be used to provide a routing service, a modification service, and a monitoring service.

Step 6: The pIPX continues to append pIPX modifications.

It should be understood that, same as the cIPX, the pIPX needs to modify the roaming message by appending a JSON block (for example, the JSON block is modificationsBlock2) to the original JSON block (that is, the original JSON block generated in step 2) and the JSON block (that is, modificationsBlock1) generated in step 4. The appended JSON block is integrity protected by the pIPX using JWS.

For example, when receiving the PDU session management context create request message, the pIPX provides a DNN translation service and re-determines a suitable DNN based on load and user location information of different DNNs, provides another service, or the like. For example, if the pIPX expects to modify a value of an IE (for example, the DNN) in the PDU session management context create request message, the pIPX needs to write, into the JSON block, a specific location of the to-be-modified IE, and a modified value of the IE, and appends the JSON block to the original JSON block and the JSON block generated in step 4. For example, assuming that a DNN in the original JSON block is DNN 1, the pIPX indicates that a value of the DNN needs to be modified to DNN 2.

Step 7: The pIPX sends, to the pSEPP, a protected HTTP request message to which the cIPX modifications and the pIPX modifications are appended. Correspondingly, the pSEPP receives the message from the pIPX.

Step 8: The pSEPP verifies integrity of information in the original JSON block and decrypts encrypted information in the original JSON block, then verifies integrity of modification content appended by the cIPX and the pIPX, and then obtains the HTTP request message through reassembly based on the modification content appended by the cIPX and the pIPX and content that is in the original JSON block and that is obtained through decryption.

In other words, a function of the pSEPP is to verify integrity of the message protected using the JWE and the JWS, decrypt the message protected using the JWE, and modify the HTTP request message based on modification descriptions of an IPX. Specifically, the pSEPP first verifies, based on the JWS, integrity of the JSON blocks generated by the pIPX and the cIPX, and then verifies, based on the JWE, the integrity protection information generated in the cSEPP and decrypts the ciphertext. Then, the pSEPP obtains modification instructions from the JSON blocks generated by the pIPX and the cIPX. Under specifications of the modification policy negotiated in the previous N32-c, the pSEPP modifies IEs at corresponding locations based on the modification instructions. Finally, the pSEPP restores the message to a message in an HTTP format (that is, obtains the HTTP request message through reassembly), and sends the message in the HTTP format to a pNF.

For example, the pSEPP can obtain the PDU session management context create request message through restoration/reassembly, and the SUPI and the DNN in the PDU session management context create request message may have been legally modified by the IPX. For example, assuming that the SUPI in the original JSON block is SUPI 1, and the DNN is DNN 1, where the cIPX indicates that the value of the SUPI needs to be modified to SUPI 2, and the pIPX indicates that the value of the DNN needs to be modified to DNN 2, the SUPI included in the PDU session management context create request message obtained through restoration is SUPI 2, and the DNN is DNN 2.

Step 9: The pSEPP sends, to the pNF, the HTTP request message obtained through reassembly.

### 5. JWE and JWS

JWE and a JWS are two types of protection algorithms. The JWE is used by a SEPP to encrypt and integrity protect a corresponding IE, or is used to only integrity protect a corresponding IE. The JWS is used by an IPX (for example, a cIPX or a pIPX) to integrity protect a roaming modification message. A JSON message that is protected by using JWE is referred to as reformattedData, and a JSON message that is protected using JWS is referred to as modificationsBlock.

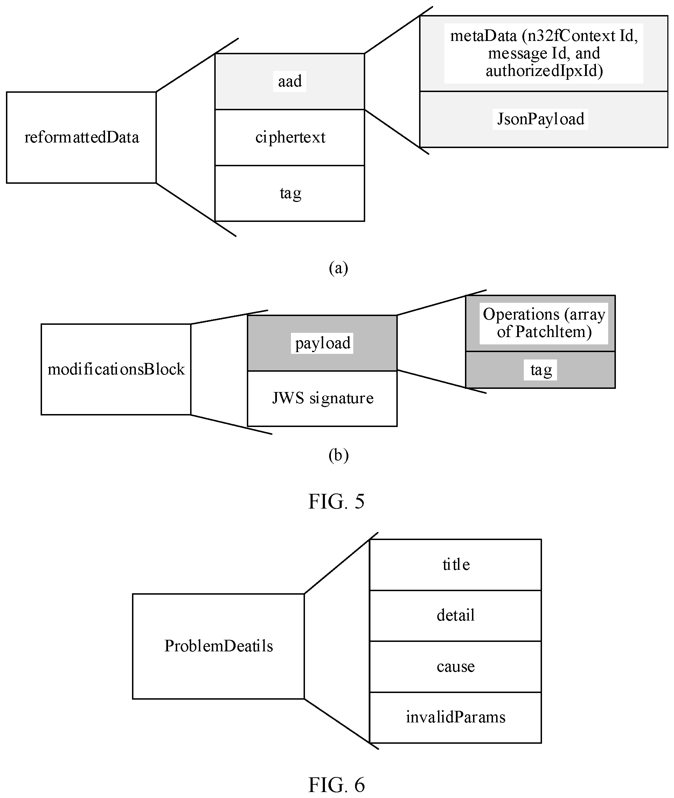

For example, FIG. 5 is a diagram of formats of reformattedData and modificationsBlock. As shown in (a) in FIG. 5, a JSON block that is protected using JWE and that is generated by a SEPP is reformattedData, where reformattedData includes:
(1) n32fContextID, used to determine a specific N32-f connection;
(2) messageId, used to determine a specific message;
(3) authorizedIpxId, used to determine an IPX ID of a next hop of the SEPP;
(4) ciphertext, including information generated after IEs that require encryption are encrypted by using the JWE, where based on a characteristic of the JWE, these IEs can be integrity protected;
(5) JsonPayload, including an IE that needs only integrity protection;
(6) tag, used for JWE integrity verification, where specifically, tag is information generated after integrity protection is performed, by using the JWE, on an IE that needs both encryption and integrity protection and the IE that needs only integrity protection; and when integrity verification is performed based on tag, whether tag is equal to tag2 generated by using the JWE needs to be compared, and if tag is equal to tag2, the integrity verification succeeds (or referred to as that the verification is successful, the verification succeeds, or the like), where specifically, tag2 is a ciphertext and the information generated by the JWE using the IE that needs only integrity protection that are in reformattedData; and
(7) other information, which is irrelevant to this application, and is not described in detail herein.

As shown in (b) in FIG. 5, a JSON block that is protected by using a JWS and that is generated by an IPX is modificationsBlock, where modificationsBlock includes:
(1) tag copied from a message in a JWE format and used to prevent a replay attack;
(2) JWS signature, used for JWS integrity verification, where specifically, JWS signature is information/a signature that is in modificationsBlock and that is generated after integrity protection is performed on an IE that needs integrity protection; when integrity verification is performed based on JWS signature, whether the signature is equal to a signature 2 generated by using the JWS needs to be compared; and the like, and if the signature is equal to the signature 2, the integrity verification succeeds, where specifically, the signature 2 is information that is generated by using the JWS for the IE that needs integrity protection and that is in modificationsBlock; and
(3) other information, which is irrelevant to this application, and is also not described in detail herein.

It should be noted that a message obtained through protection by using the JWE may be understood as a JSON block, and a message obtained through protection by using the JWS may also be understood as a JSON block.

### 6. Error message transmission between SEPPs

As shown in Table 1, error types between SEPPs have been defined in 3GPP TS 29.573. Transmission of the error types is performed by using ProblemDetails. It should be understood that ProblemDetails is also a JSON block. For example, FIG. 6 is a diagram of a format of ProblemDetails. ProblemDetails includes:
(1) title, indicating a human-readable error type summary;
(2) detail, indicating a human-readable error type;
(3) cause, indicating a machine-readable error type;
(4) invalidParams, indicating an IE that causes the error type; and
(5) other information, which is irrelevant to this application, and is also not described in detail herein.

It should be understood that a SEPP may directly send ProblemDetails to a peer SEPP over an N32-f interface. ProblemDetails includes five error types: "PLMNID_MISMATCH", "SNPNID_MISMATCH", "REQUESTED_PURPOSE_NOT_ALLOWED", "CONTEXT_NOT_FOUND", and "UNSPECIFIED".

**Table 1 Error types**

| **Data type** | **P** | **Cardinality** | **Response codes** | **Description** |
|---|---|---|---|---|
| | | | | When the receiving SEPP fails to process the reconstructed message due to PLMN ID or SNPN ID verification failure, the "cause" attribute shall be set to "PLMNID_MISMATCH" or "SNPNID_MISMATCH". |
| ProblemDetails | O | 0..1 | 403 Forbidden | When the receiving SEPP receives HTTP requests over N32-f with purpose, marked using 3gpp-Sbi-Interplmn-Purpose header as specified in 3GPP TS 29.500 [4], that does not match with any of the purposes exchanged via the Security Capability Negotiation procedure, then the "cause" attribute shall be set to "REQUESTED_PURPOSE_NOT_ALLOW ED". |
| | | | | When the receiving SEPP fails to process the reconstructed message due to n32fContextId is unknown, the "cause" attribute shall be set to "CONTEXT_NOT_FOUND". |
| | | | | When the receiving SEPP fails to process the reconstructed message, and the error is reported by N32f error reporting procedure as specified in clause 5.2.5, the "cause" attribute shall be set to "UNSPECIFIED". |

It should be noted that, as user requirements increase, an IPX may provide routing services, modification services, monitoring services, and error message generation services. For example, the IPX may determine whether a message that was expected to be encrypted for transmission is transmitted in plaintext, determine whether a message that was expected to be transmitted in plaintext is encrypted, and the like. If the determining fails, the IPX generates error messages, and sends the error messages to a cSEPP or a pSEPP. However, currently, an error message response mechanism between the IPX and the SEPP is not defined in related standards.

In view of this, this application proposes a communication method, and an error message response mechanism between an IPX and a SEPP is defined in the communication method, to help improve communication reliability.

It should be noted that a first NF and a first SEPP mentioned in the following embodiments of this application belong to a same PLMN, for example, a first PLMN, and a second NF and a second SEPP belong to a same PLMN, for example, a second PLMN. A first IPX is an IPX deployed by a first roaming intermediary service provider on a first PLMN side, and a second IPX is an IPX deployed by a second roaming intermediary service provider on a second PLMN side. The first PLMN and the second PLMN are different PLMNs. For example, the first PLMN is a vPLMN, and the second PLMN is an hPLMN. For another example, the first PLMN is an hPLMN, and the second PLMN is a vPLMN. This is not limited in this application.

It should be understood that, when the first PLMN is a vPLMN, and the second PLMN is a hPLMN, the first NF is a cNF, the first SEPP is a cSEPP, the first IPX is a cIPX, the second NF is a pNF, the second SEPP is a pSEPP, and the second IPX is a pIPX. Correspondingly, an HTTP message sent by the first SEPP is an HTTP request message. When the first PLMN is a hPLMN, and the second PLMN is a vPLMN, the first SEPP is a pSEPP, the first IPX is a pIPX, the second SEPP is a cSEPP, and the second IPX is a cIPX. Correspondingly, an HTTP message sent by the first SEPP is an HTTP response message. For ease of understanding, the following mainly uses an example in which the first PLMN is a vPLMN and the second PLMN is an hPLMN for description.

The following describes in detail the communication method and communication apparatuses provided in this application.

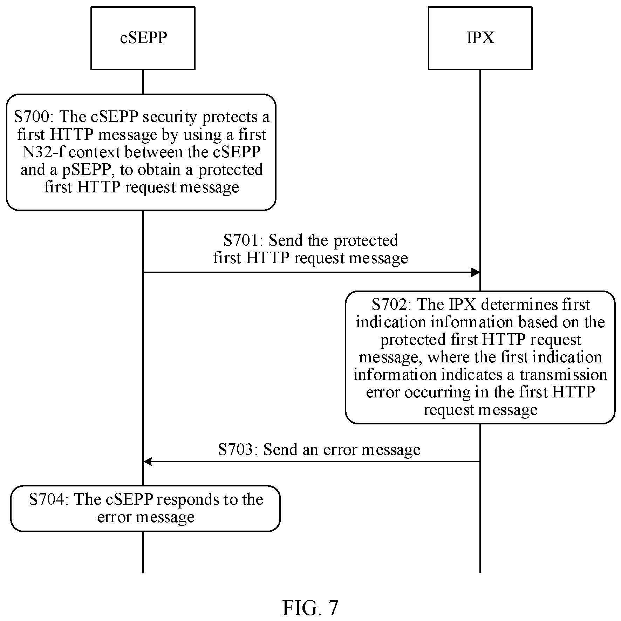

FIG. 7 is a schematic interaction flowchart of a communication method according to an embodiment of this application. As shown in FIG. 7, the communication method includes the following steps S700 to S704. The method shown in FIG. 7 may be performed by a cSEPP and an IPX, or the method shown in FIG. 7 may be performed by a chip in the cSEPP and a chip in the IPX. For ease of description, in FIG. 7, an example in which the method is performed by a cSEPP and an IPX is mainly used for description. It should be noted that FIG. 7 is a schematic flowchart of a method embodiment of this application, and shows detailed communication steps or operations of the method. However, these steps or operations are merely examples. Other operations or variants of various operations in FIG. 7 may be further performed in embodiments of this application. In addition, the steps in FIG. 7 may be separately performed in a sequence different from that presented in FIG. 7, and not all the operations in FIG. 7 may be necessarily performed.

S700: The cSEPP performs security protection on a first HTTP request message by using a first N32-f context between the cSEPP and a pSEPP, to obtain a protected first HTTP request message.

It should be understood that the first N32-f context is an N32-f context generated after an N32-c handshake procedure is performed between the cSEPP and the pSEPP. For understanding of the "N32-c handshake procedure" and the "N32-f context", refer to the related descriptions in the foregoing "3. N32-c handshake procedure and N32-f context". Details are not described herein again. Generally, the cSEPP and the pSEPP each store the first N32-f context.

The first HTTP request message may be used to implement a roaming service between the cSEPP and the pSEPP. For example, in a primary authentication procedure, the first HTTP request message may be a user authentication request message, and the user authentication request message is used to trigger a service of authenticating UE by an AUSF in a hPLMN. For another example, in a PDU session establishment procedure, the first HTTP request message may be a PDU session management context create request message, and the request message is used to create a session management context service between a vAMF and an hSMF.

Generally, the first HTTP request message is an HTTP request message sent by a cNF to the cSEPP, for example, step 1 described in FIG. 4. In addition, for understanding of performing security protection on the first HTTP request message by the cSEPP by using the first N32-f context between the cSEPP and the pSEPP, to obtain the protected first HTTP request message, refer to the related descriptions of step 2 in FIG. 4. Details are not described herein.

It should be understood that the protected first HTTP request message includes a JSON block, that is, an original JSON block. Information in the original JSON block is protected using JWE, or the original JSON block is reformattedData.

S701: The cSEPP sends the protected first HTTP request message to the IPX. Correspondingly, the IPX receives the protected first HTTP request message from the cSEPP.

It should be understood that the IPX in this embodiment of this application may be a cIPX and/or a pIPX. In a possible implementation, when only one IPX is deployed in a network, the IPX may be a cIPX or a pIPX. In another possible implementation, both two IPXs may alternatively be deployed, and the two IPXs are respectively a cIPX and a pIPX.

S702: The IPX determines first indication information based on the protected first HTTP request message, where the first indication information indicates a transmission error of the first HTTP request message.

It may be understood that, after receiving the protected first HTTP request message from the cSEPP, the IPX may process the received message, to determine whether an error occurs in transmission of the message/whether transmission of the message meets a requirement of the IPX. For example, the IPX may determine whether an IE that was expected to be encrypted for transmission is transmitted in plaintext, determine whether an IE that was expected to be transmitted in plaintext is encrypted, or the like. If the determining fails, the IPX may generate the first indication information, and send the first indication information to the cSEPP. Specifically, the first indication information may be carried in an error message.

In an example 1, it is assumed that only one IPX is deployed in the network. In this case:
1-1: If only a cIPX is deployed in the network, the cSEPP may send the protected first HTTP request message to the cIPX, the cIPX determines, based on the received protected first HTTP request message, whether an error occurs, and if determining that the error occurs, the cIPX discards the received message, generates an error message, and sends the error message to the cSEPP; and
1-2: If only a pIPX is deployed in the network, the cSEPP may send the protected first HTTP request message to the pIPX, the pIPX determines, based on the received protected first HTTP request message, whether an error occurs; and if determining that the error occurs, the pIPX discards the received message, generates an error message, and sends the error message to the cSEPP.

In an example 2, it is assumed that both a cIPX and a pIPX are deployed in the network. In this case:
2-1: The cSEPP may send the protected first HTTP request message to the cIPX, the cIPX determines, based on the protected first HTTP request message, whether an error occurs, and if determining that the error occurs, the cIPX discards the received message, generates an error message, and sends the error message to the cSEPP, where the pIPX does not participate in a routing/forwarding procedure of the first HTTP request message; and
2-2: The cSEPP may send the protected first HTTP request message to the cIPX, and then the cIPX normally processes the message and sends a processed message to the pIPX for forwarding/sending (for example, the related descriptions of step 4 in FIG. 4, and details are not described herein). Further, the pIPX determines, based on the received message, whether an error occurs. If determining that the error occurs, the pIPX discards the received message, generates an error message, and sends the error message to the cIPX, and the cIPX forwards/sends the error message to the cSEPP.

It can be learned from the example 1 and the example 2 that, the IPX that performs error determining and generates the error message may be either a cIPX or a pIPX. Therefore, for ease of description, the IPX is uniformly used for description subsequently.

In a possible implementation 1, the error message generated by the IPX may include a JSON block (described as a JSON block 1 subsequently for ease of differentiation). The JSON block 1 includes two parts of content: a first part of content and a second part of content. The following separately describes the first part of content and the second part of content.

The first part of content may have the following two cases.

In a case 1, the first part of content does not include ciphertext and/or JsonPayload defined in TS 29.573 (or referred to as that ciphertext and/or JsonPayload are/is left empty), and the first part of content includes content other than ciphertext and/or JsonPayload in reformattedData defined in TS 29.573. For example, the first part of content includes tag, n32fContextID, messageId, authorizedIpxId, and the like that are generated by using the JWE and that are used for integrity verification.

In a case 2, the first part of content includes one or more of n32fContextID, messageId, and authorizedIpxId that are defined in TS 29.573, and the first part of content does not include content other than n32fContextID, messageId, and authorizedIpxId in reformattedData defined in TS 29.573.

The second part of content includes the first indication information, and the first indication information indicates the transmission error (or referred to as a type of error) of the first HTTP request message. The following separately describes different types of errors. Details are not described herein.

In a possible implementation 2, the error message generated by the IPX may include two JSON blocks (respectively described as a JSON block 2 and a JSON block 3 subsequently for ease of differentiation). The JSON block 2 includes a first part of content, and the JSON block 3 includes a second part of content. It should be understood that, in the implementation 2, the JSON block 2 may be in a JSON format in which protection is performed by using the JWE, and the JSON block 3 may be in a JSON format in which protection is performed by using a JWS. Optionally, in addition to the first indication information, the JSON block 3 may further include content such as tag (to be specific, tag copied from the original JSON block) and JWS signature (referred to as JWS signature 1 subsequently for ease of differentiation). This is not limited herein. For example, JWS signature 1 may be a signature generated after integrity protection is performed on an IE that needs integrity protection in the JSON block 3, or JWS signature 1 may be a signature generated after integrity protection is performed on an IE that needs integrity protection in the JSON block 3 and an IE that needs integrity protection in the JSON block 2.

In a possible implementation 3, the error message generated by the IPX may include three JSON blocks (respectively described as a JSON block 4, a JSON block 5, and a JSON block 6 subsequently for ease of differentiation).

The JSON block 4 includes a first part of content. For descriptions of the first part of content, refer to the foregoing related part. Details are not described herein.

The JSON block 5 is a JSON block generated after the IPX performs normal processing (for example, modificationsBlock generated after processing is performed in step 4 in FIG. 4). However, a difference from that in step 4 in FIG. 4 lies in that indication information (referred to as second indication information subsequently for ease of differentiation) may be further newly added to the JSON block 5 in this embodiment of this application. The second indication information indicates that the JSON block 6 exists. Optionally, the JSON block 5 may further include JWS signature (referred to as JWS signature 2 subsequently for ease of differentiation). JWS signature 2 may be a signature generated after integrity protection is performed on an IE that needs integrity protection in the JSON block 5, or JWS signature 2 may be a signature generated after integrity protection is performed on an IE that needs integrity protection in the JSON block 4 and an IE that needs integrity protection in the JSON block 5. This is not limited in this application.

The JSON block 6 includes a second part of content. In addition, the JSON block 6 may further include information such as tag (to be specific, tag copied from the original JSON block) and JWS signature (referred to as JWS signature 3 subsequently for ease of differentiation). JWS signature 3 may be a signature generated after integrity protection is performed on an IE that needs integrity protection in the JSON block 6, JWS signature 3 may be a signature generated after integrity protection is performed on an IE that needs integrity protection in the JSON block 4 and an IE that needs integrity protection in the JSON block 6, or the like. Details are determined based on implementation. This is not limited herein

In a possible implementation 4, the IPX may reuse ProblemDetails to carry the first indication information, to be specific, the error message generated by the IPX includes ProblemDetails, and ProblemDetails includes the first indication information. It should be understood that, in the implementation 4, the first indication information may be specifically placed in title, detail, or cause in ProblemDetails. This is not specifically limited. Optionally, an IE that causes an error type indicated by the first indication information may be placed in invalidParams in ProblemDetails. A definition of invalidParams is described in detail in a related part in S702. This is not explained herein. It should be understood that, in the implementation 4, integrity protection is not performed on content in ProblemDetails.

In a possible implementation 5, the IPX may reuse ProblemDetails to carry the first indication information, and integrity protect an IE that requires integrity protection in ProblemDetails. Solutions for the IPX to integrity protect the IE that requires integrity protection in ProblemDetails include the following two solutions.

In a first solution, a JSON block (described as a JSON block 7 subsequently for ease of differentiation) is newly appended to ProblemDetails. The JSON block 7 includes integrity protection information (referred to as JWS signature 4 subsequently for ease of differentiation) generated after integrity protection is performed on the IE that needs integrity protection in ProblemDetails. For example, content that needs integrity protection in ProblemDetails may be IEs such as title/detail/cause and invalidParams. Therefore, integrity protection may be performed on title/detail/cause and invalidParams in ProblemDetails by using a JWS, to generate JWS signature 4. It should be understood that, in the first solution, the first indication information and JWS signature 4 are carried in different JSON blocks, to be specific, the first indication information is carried in ProblemDetails, and JWS signature 4 is carried in the JSON block 7.

In a second solution, a signature attribute is newly added to ProblemDetails, where the signature attribute includes a JWS signature 4. In other words, in the second solution, JWS signature 4 and the first indication information are carried in a same JSON block, that is, ProblemDetails.

In addition, similar to the implementation 4, in the implementation 5, the first indication information may also be placed in title, detail, or cause in ProblemDetails. This is not specifically limited. Optionally, an IE that causes the error type indicated by the first indication information may be placed in invalidParams in ProblemDetails.

It should be noted that the error message in the implementation 1 to the implementation 3 may also be referred to as a second message, and the error message in the implementation 4 and the implementation 5 may also be referred to as a first message. For ease of description, the "error message" is uniformly used for description below.

S703: The IPX sends the error message to the cSEPP. Correspondingly, the cSEPP receives the error message from the IPX.

It should be understood that, in the embodiment shown in FIG. 7, the error message is a message sent by the IPX to the cSEPP in response to the protected first HTTP request message sent by the cSEPP. In step S703, the IPX does not send both the error message and the protected first HTTP request message to the cSEPP, and the IPX does not continue to forward, to the pSEPP, the protected first HTTP request message received by the IPX, that is, the IPX discards the received protected first HTTP request message.

S704: The cSEPP responds to the error message.

Herein, that the cSEPP responds to the error message may be understood as that the cSEPP parses the error message to obtain the first indication information, and performs an error response operation corresponding to the transmission error (or referred to as the error type) indicated by the first indication information. Optionally, if integrity protection information (that is, JWS signature) exists in the error message, for example, JWS signature 1, JWS signature 2, JWS signature 3, or JWS signature 4, the cSEPP needs to first perform integrity protection verification on corresponding content in the error message based on corresponding JWS signature, and in the case that a verification result is successful verification/is successful, performs the error response operation corresponding to the transmission error (or referred to as the error type) indicated by the first indication information. For a manner of performing integrity verification based on JWS signature, refer to the related descriptions in the foregoing "5. JWE and JWS". Details are not described herein.

It should be noted that, when a manner of generating the error message is any one of the implementation 1 to the implementation 3:
for the first part of content in the case 1, the cSEPP may determine, by determining that ciphertext and/or JsonPayload in the first part of content are/is empty (that is, the first part of content does not include ciphertext and/or JsonPayload), that the received error message is the message sent by the IPX in response to the protected first HTTP request message sent by the cSEPP (to be specific, the cSEPP may determine that the specifically received error message is a message including the transmission error, and therefore, the cSEPP may continue to parse content carried in the error message instead of discarding the received error message); or
for the first part of content in the case 1 or the case 2, if determining that n32fContextID included in the first part of content is the same as n32fContextID included in the protected first HTTP request message sent by the cSEPP, messageId included in the first part of content is the same as messageId included in the protected first HTTP request message sent by the cSEPP, and/or authorizedIpxId included in the first part of content is the same as authorizedIpxId included in the protected first HTTP request message sent by the cSEPP, the cSEPP may determine that the received error message is the message fed back by the IPX in response to the protected first HTTP request message sent by the cSEPP.

It should be noted that, when a manner of generating the error message is the implementation 2 or the implementation 3:
if the error message further includes tag (for example, tag included in the JSON block 3 in the implementation 2 or tag included in the JSON block 6 in the implementation 3), the cSEPP may determine, by determining that tag in the error message is the same as tag included in the protected first HTTP request message sent by the cSEPP, that the received error message is the message fed back by the IPX in response to the protected first HTTP request message sent by the cSEPP.

It should be noted that, when a manner of generating the error message is the implementation 4 or the implementation 5:
the cSEPP may determine, based on a format of ProblemDetails, that the received first message includes the transmission error, and therefore, the cSEPP may directly parse ProblemDetails to obtain the first indication information carried in ProblemDetails.

The following describes how the cSEPP specifically performs different error response operations based on different transmission errors (that is, error types) indicated by the first indication information. Specifically, this application mainly relates to three types of response operations. The three types of response operations are as follows.

Error response operation type 1: The cSEPP renegotiates/re-exchanges a parameter with the pSEPP to obtain a second N32-f context between the cSEPP and the pSEPP; the cSEPP performs security protection on the first HTTP request message by using the second N32-f context, to obtain a re-protected first HTTP request message; and the cSEPP sends the re-protected first HTTP request message to the IPX. In other words, the cSEPP may update the N32-f context between the cSEPP and the pSEPP, perform security protection on the first HTTP request message based on the updated N32-f context to obtain the re-protected first HTTP request message, and then send the re-protected first HTTP request message to the IPX. Correspondingly, the IPX receives the re-protected first HTTP request message from the first SEPP, and sends the re-protected first HTTP request message to the pSEPP. It may be understood that, for a process in which the cSEPP renegotiates/re-exchanges the parameter with the pSEPP to obtain the second N32-f context between the cSEPP and the pSEPP through update, refer to FIG. 2a.

For example, in a possible scenario 1, the cSEPP may perform security protection on the first HTTP request message by using the first N32-f context between the cSEPP and the pSEPP, to obtain the protected first HTTP request message, and the cSEPP may send the protected first HTTP request message to the IPX, where an encryption policy that is for a first IE in the first HTTP request message and that is in the first N32-f context is encrypting. Therefore, after receiving the protected first HTTP request message, the IPX may determine whether the first IE in the protected first HTTP request message is encrypted. When the first IE is encrypted (this is because the IPX requires that the first IE not be encrypted while the first IE in the protected first HTTP request message is encrypted actually, and it may be understood that a requirement of the IPX may be determined based on a pre-configuration profile 2/3), the IPX sends the first indication information to the cSEPP, where the first indication information indicates that the first IE is encrypted in the protected first HTTP request message while the IPX requires that the first IE not be encrypted. Correspondingly, after receiving the first indication information, the cSEPP re-exchanges the parameter with the pSEPP to obtain the second N32-f context between the cSEPP and the pSEPP, the cSEPP performs security protection on the first HTTP request message by using the second N32-f context, to obtain the re-protected first HTTP request message, and the cSEPP sends the re-protected first HTTP request message to the IPX, where an encryption policy that is for the first IE and that is in the second N32-f context is not encrypting the first IE. Correspondingly, the IPX receives the re-protected first HTTP request message from the first SEPP, and sends the re-protected first HTTP request message to the pSEPP.

Optionally, explanations of the scenario 1 herein may be replaced with other descriptions of the scenario 1 below. Details are not described herein.

For example, in a possible scenario 2, the cSEPP may perform security protection on the first HTTP request message by using the first N32-f context between the cSEPP and the pSEPP, to obtain the protected first HTTP request message, and the cSEPP may send the protected first HTTP request message to the IPX, where an encryption policy that is for a second IE in the first HTTP request message and that is in the first N32-f context is that encryption is not performed. Therefore, after receiving the protected first HTTP request message, the IPX may determine whether the second IE in the protected first HTTP request message is encrypted. When the second IE is not encrypted (this is because the IPX requires that the second IE be encrypted while the second IE in the protected first HTTP request message is not encrypted actually, and it may be understood that a requirement of the IPX may be determined based on a pre-configuration profile 2/3), the IPX sends the first indication information to the cSEPP, where the first indication information indicates that the second IE is not encrypted in the protected first HTTP request message while the IPX requires that the second IE be encrypted. Correspondingly, after receiving the first indication information, the cSEPP re-exchanges the parameter with the pSEPP to obtain the second N32-f context between the cSEPP and the pSEPP, the cSEPP performs security protection on the first HTTP request message by using the second N32-f context, to obtain the re-protected first HTTP request message, and the cSEPP sends the re-protected first HTTP request message to the IPX, where an encryption policy that is for the second IE and that is in the second N32-f context is not encrypting the second IE. Correspondingly, the IPX receives the re-protected first HTTP request message from the first SEPP, and sends the re-protected first HTTP request message to the pSEPP.

Optionally, explanations of the scenario 2 herein may be replaced with other descriptions of the scenario 2 below. Details are not described herein.

Optionally, the error response operation type 1 may also be described as that the cSEPP re-sets up an N32 connection to the pSEPP, which is referred to as re-setting up the N32 connection for short (herein, re-setting up the N32 connection is also referred to as re-performing the N32-c handshake procedure), and sends the first HTTP request message based on the re-set up N32 connection. For understanding of the N32-c handshake procedure, refer to the foregoing descriptions of "2. N32-c handshake procedure". Details are not described herein.

It should be understood that because negotiating a protection policy is a sub-procedure in a parameter exchange procedure of the N32-c handshake procedure, the error response operation type 1 in this embodiment of this application may also be described as that the cSEPP renegotiates only a protection policy with the pSEPP, and the cSEPP performs security protection on the first HTTP request message again based on the new protection policy, to obtain the re-protected first HTTP request message; and the cSEPP sends the re-protected first HTTP request message to the IPX. A procedure of negotiating the protection policy is shown in FIG. 2a. Details are not described herein.

Error response operation type 2: The cSEPP processes/modifies the first HTTP request message based on the first indication information, to obtain a second HTTP request message; the cSEPP performs security protection on the second HTTP request message by using the first N32-f context, to obtain a protected second HTTP request message; and the cSEPP sends the protected second HTTP request message to the IPX. Correspondingly, the IPX receives the protected second HTTP request message from the cSEPP, and sends the protected second HTTP request message to the pSEPP.

Optionally, the error response operation type 2 may also be described as resending an HTTP request message, that is, sending the second HTTP request message.

For example, in a possible scenario 3, when the IPX determines that the protected first HTTP request message includes a plaintext identifier of the cNF, the IPX sends the first indication information to the cSEPP, where the first indication information indicates that a network topology of a PLMN in which the cSEPP is located is not hidden, where the cNF is a network element requesting the roaming service. Correspondingly, the cSEPP may anonymize the plaintext identifier that is of the cNF and that is in the first HTTP request message, to obtain an anonymous identifier of the cNF; and the cSEPP replaces, with the anonymous identifier of the cNF, the plaintext identifier that is of the cNF and that is in the first HTTP request message, to obtain the second HTTP request message. Then, the cSEPP may perform security protection on the second HTTP request message by using the first N32-f context, to obtain the protected second HTTP request message, and the cSEPP may send the protected second HTTP request message to the IPX. Correspondingly, the IPX receives the protected second HTTP request message from the cSEPP, and sends the protected second HTTP request message to the pSEPP.

Optionally, explanations of the scenario 3 herein may be replaced with other descriptions of the scenario 3 below. Details are not described herein.

For example, in a possible scenario 4, the IPX determines whether a name of a message format that is in a message header and that is of the protected first HTTP request message is a first format, and when the name of the message format that is in the message header and that is of the protected first HTTP request message is not the first format, the IPX sends the first indication information to the cSEPP, where the first indication information indicates that the message format of the protected first HTTP request message is not the first format. Correspondingly, the cSEPP may convert the message format of the first HTTP request message into the first format based on the first indication information, to obtain a second HTTP request message. Then, the cSEPP may perform security protection on the second HTTP request message by using the first N32-f context, to obtain the protected second HTTP request message, and the cSEPP may send the protected second HTTP request message to the IPX. For example, the first format may be a JSON format. Correspondingly, the IPX receives the protected second HTTP request message from the cSEPP, and sends the protected second HTTP request message to the pSEPP.

Optionally, explanations of the scenario 4 herein may be replaced with other descriptions of the scenario 4 below. Details are not described herein.

Error response operation type 3: The cSEPP deletes an N32-f context between the first SEPP and a second SEPP. Optionally, the error response operation type 3 may also be described as that the cSEPP interrupts an N32 connection to the pSEPP, which is referred to as interrupting the N32 connection (or referred to as interrupting an N32-f connection) for short. For a procedure of "interrupting the N32 connection", refer to FIG. 2b. Details are not described herein.

Error response operation type 4: The cSEPP cancels sending of an HTTP request message, that is, cancels sending of the first HTTP request message.

The following separately describes in detail error response operations used for different types of errors.

In a possible scenario 1, when the IPX cannot provide a service normally because the IPX determines that a message that was expected to be transmitted in plaintext is encrypted for transmission, the error type may be described as "an IE is encrypted while it was expected to be transmitted in plaintext (an IE is encrypted while it was expected to be available in the clear)". Correspondingly, after obtaining the error type, the cSEPP may re-set up an N32 connection or interrupt an N32 connection. Specifically, the cSEPP may renegotiate a protection policy based on an indication of a pre-configuration profile 1. If the pre-configuration profile 1 indicates that a corresponding type of IE (herein, the "corresponding type of IE" is an IE that was expected to be transmitted in plaintext) is not required to be forcibly encrypted, the new protection policy may be not encrypting the corresponding type of IE. If the pre-configuration profile 1 indicates that a corresponding type of IE is required to be forcibly encrypted, the cSEPP may interrupt the N32 connection; an operator to which the cSEPP belongs may re-sign a contract with an operator to which the pSEPP belongs, the pre-configuration profile 1 in the cSEPP and the pSEPP is updated based on the new contract, and therefore, the cSEPP may re-set up an N32 connection to the pSEPP based on the new pre-configuration profile 1, where for example, the cSEPP may renegotiate a protection policy based on the new pre-configuration profile 1; or ③an operator to which the cSEPP belongs may re-sign a contract with a roaming intermediary service provider that deploys the IPX. It should be understood that the IPX herein specifically refers to an IPX that provides a roaming service for the cSEPP (that is, the cIPX). For example, the IPX that provides the roaming service for the cSEPP is the cIPX instead of the pIPX. In other words, if ③ is used, a scenario needs to be restricted. If an error message is generated by the pIPX and sent to the cSEPP, the operator to which the cSEPP belongs does not update the contract with an operator of the pIPX, that is, the solution ③ cannot be used. It should be noted that, if the solution ③ is used, after the contract is re-signed, a corresponding pre-configuration profile 2 is updated, where a new pre-configuration profile 2 may indicate the cIPX not to provide a service related to the "corresponding type of IE ".

It should be understood that, that the pre-configuration profile 1 indicates that a type of IE is not required to be forcibly encrypted means that the type of IE may be encrypted or may not be encrypted. Specifically, whether the type of IE is encrypted or not encrypted may be determined in the N32-c handshake procedure. It should be understood that a requirement of the IPX for whether an IE needs to be encrypted is determined based on a service provided by the IPX. This is not limited in this application.

For example, it is assumed that the cIPX may provide an SUPI-based routing service, where the pre-configuration profile 1 indicates that an SUPI does not need to be forcibly encrypted, and the negotiated protection policy is that the SUPI needs to be encrypted. Therefore, the cSEPP encrypts the SUPI according to the protection policy, includes the encrypted SUPI in an HTTP request message, and sends the HTTP request message to the clPX. After the cIPX receives the HTTP request message, if the cIPX determines that the SUPI in the HTTP request message is encrypted, and consequently the cIPX cannot provide the SUPI-based routing service, the cIPX sends, to the cSEPP, an error message carrying "an IE is encrypted while it was expected to be available in the clear". After the cSEPP obtains the error type, the cSEPP may renegotiate a protection policy based on the indication of the pre-configuration profile 1, where the new protection policy is that the SUPI does not need to be encrypted.

In a possible scenario 2, when the IPX determines that a message that was expected to be encrypted for transmission is transmitted in plaintext, the error type may be described as that "an IE is not encrypted while its plaintext transmission was not required (an IE is not encrypted while its availability in the clear is not required)". Correspondingly, after obtaining the error type, the cSEPP may re-set up an N32 connection. Specifically, the cSEPP may renegotiate a protection policy based on an indication of a pre-configuration profile 1. If the pre-configuration profile 1 indicates that a corresponding type of IE (herein, the "corresponding type of IE" is an IE that was expected to be encrypted for transmission) does not need to be forcibly encrypted, the new protection policy may be encrypting the corresponding type of IE.

For example, it is assumed that the cIPX requires that a user location be encrypted for transmission, where the pre-configuration profile 1 indicates that the user location is not required to be forcibly encrypted, and the negotiated protection policy is that the user location does not need to be encrypted. Therefore, the cSEPP performs plaintext transmission of the user location (that is, encrypts the user location) according to the protection policy, includes, in an HTTP request message, the user location of which plaintext transmission is performed, and sends the HTTP request message to the cIPX. After the cIPX receives the HTTP request message, if the cIPX determines that the user location in the HTTP request message is not encrypted while the cIPX requires that the user location be expected to be encrypted for transmission, the cIPX sends, to the cSEPP, an error message carrying "an IE is not encrypted while its availability in the clear is not required". After the cSEPP obtains the error type, the cSEPP may renegotiate a protection policy based on the indication of the pre-configuration profile 1, where the new protection policy is that the user location needs to be encrypted.

In a possible scenario 3, when the IPX determines that a network topology of a PLMN in which the cSEPP is located is not hidden, the error type may be described as that "a network topology is not hidden (Network Topology is not hidden)". Correspondingly, after obtaining the error type, the cSEPP resends an HTTP request message, and a network topology in the resent HTTP request message is hidden. Optionally, the cSEPP may alternatively re-subscribe to the cIPX, to indicate that a service of determining whether the network topology is hidden does not need to be performed. Therefore, the cSEPP may resend an HTTP request message, and a network topology in the HTTP request message is not hidden.

It may be understood that "the network topology of the PLMN in which the cSEPP is located" in this embodiment of this application may be understood as a set of a plurality of network function (network function, NF) full qualified domain names (full qualified domain names, FQDNs). The plurality of NF FQDNs are NF FQDNs corresponding to a plurality of NFs included in the PLMN in which the cSEPP is located. One NF corresponds to one NF FQDN, and one NF FQDN includes one NF ID and one local network domain name. For an HTTP request message, "hiding a network topology" may be understood as that transmission of an identifier of an NF (namely, an NF ID) in the HTTP request message is performed anonymously, that is, the HTTP request message includes an anonymous identifier of the NF. For example, a SEPP converts the NF FQDN into a telescopic FQDN (the telescopic FQDN includes one anonymous identifier of the NF and one local network domain name, and the anonymous identifier of the NF is a parameter obtained by processing the NF ID by using a first function (for example, Nsepp_Telescopic_FQDN_Mapping)). Alternatively, a SEPP replaces the NF ID in the NF FQDN with a random number by using an implementation algorithm of the SEPP, to obtain the anonymous identifier of the NF, and includes, in the HTTP request message, the anonymous identifier of the NF and obtained through conversion. "Not hiding a network topology" may be understood as that transmission of the identifier of the NF (namely, the NF ID) in the HTTP request message is not performed anonymously, that is, the HTTP request message includes a plaintext identifier of the NF. For example, the NF FQDN is not converted or is simply converted (the NF ID can also be identified after the simple conversion, which is equivalent to non-anonymization) and then carried in the HTTP request message for sending. Therefore, a manner of the IPX determining whether a network topology is hidden is determining whether an NF FQDN is converted into the telescopic FQDN, or determine whether an NF ID part in an NF FQDN is replaced with a random number.

In a possible scenario 4, when the IPX determines that a format of a received message is incorrect, the error type may be described as an "incorrect information format (Incorrect message format)". Correspondingly, after obtaining the error type, the cSEPP may modify the message format and then resend the HTTP request message, or the cSEPP may cancel sending of the HTTP request message.

In a possible scenario 5, when the IPX determines that the N32 connection cannot be maintained due to contractual reasons (for example, because a contract between the cSEPP and the cIPX expires or is about to expire, the cIPX no longer provides a routing service for the cSEPP; because a contract between the pSEPP and the pIPX expires or is about to expire, the pIPX no longer provides a routing service for the cSEPP; or because a contract between the cSEPP and the pSEPP expires or is about to expire, and the cSEPP notifies the cIPX that the contract expires or the pSEPP notifies the pIPX that the contract expires, the IPX determines that the N32 connection cannot be maintained), the error type may be described as that "the N32 connection cannot be set up due to the contractual reasons (the N32 connection cannot be set up due to the contractual reasons)". Correspondingly, after obtaining the error type, the cSEPP may interrupt the N32 connection. Optionally, in the scenario 5, the cSEPP may alternatively wait for the cSEPP and the cIPX to re-sign a contract or the pSEPP and the pIPX to re-sign a contract, and then re-set up the N32 connection.

In a possible scenario 6, when the IPX determines that the N32 connection cannot be maintained due to a connectivity issue (for example, because a connectivity issue exists between the cIPX and the pIPX, a connectivity issue exists between the pIPX and the pSEPP, an issue occurs in the cIPX, or an issue occurs in the pIPX, the N32 connection cannot be maintained), the error type may be described as that "the N32 connection cannot be set up due to a connectivity issue (the N32 connection cannot be set up due to the connectivity issue)". Correspondingly, after obtaining the error type, the cSEPP may interrupt the N32 connection.

In a possible scenario 7, when the IPX determines that transmission/forwarding of the message is not successful due to contractual reasons (for example, a contract between the cSEPP and the cIPX expires or is about to expire, or a contract between the pSEPP and the pIPX expires or is about to expire), the error type may be described as that "the HTTP request message was not delivered due to the contractual reasons (the message was not delivered due to the contractual reasons)". Correspondingly, after obtaining the error type, the cSEPP may interrupt the N32 connection. Optionally, in the scenario 7, the cSEPP may alternatively wait for the cSEPP and the cIPX to re-sign a contract or the pSEPP and the pIPX to re-sign a contract, and then re-set up the N32 connection.

In a possible scenario 8, when the IPX rejects a request that includes an IE/some IEs (for example, SUPIs), the error type may be described as that "an NF request is rejected/disallowed (NF request is rejected/disallowed)". Correspondingly, after obtaining the error type, the cSEPP may cancel sending of the HTTP request message, or the cSEPP may re-subscribe to the cIPX to obtain a new pre-configuration profile 2, to indicate the cIPX to open a service for a corresponding type of IE, or indicate that the cIPX does not need to provide a service related to a corresponding type of IE (herein, "the corresponding type of IE" is an IE that may be rejected) (in this way, the IPX cannot reject a request related to the IE). Therefore, the cSEPP may resend the HTTP request message.

For example, when the cIPX provides a user-level roaming service, the cIPX can screen a user who is allowed to roam, and provide a service for the user. When the cIPX discovers that a user (for example, SUPI 1) is not allowed to roam, the cIPX sends an error message including that " the NF request is rejected/disallowed". Therefore, the cSEPP may re-subscribe to the cIPX to obtain the new pre-configuration profile 2, where the new pre-configuration profile 2 may indicate the cIPX to open/provide a roaming service of SUPI 1. Therefore, the cSEPP may resend the HTTP request message including SUPI 1.

In a possible scenario 9, when the IPX fails to find, from the hPLMN, an hPLMN to which a generic public subscription identifier (generic public subscription identifier, GPSI) carried in an HTTP request message actually belongs currently, the error type may be described as "PLMN not found (PLMN not Found)". Correspondingly, after obtaining the error type, the cSEPP cancels sending of the HTTP request message.

For example, in HTTP request message transfer in a mobile number portability scenario, if the IPX fails to find, from a UDM of the hPLMN, the hPLMN to which the GPSI carried in the HTTP request message actually belongs currently, and consequently the HTTP request message cannot be normally delivered, the IPX may send "PLMN not Found" to the cSEPP. Therefore, the cSEPP may cancel sending of the HTTP request message. For example, it is assumed that a vPLMN is a network of an operator A in a country M, an hPLMN 1 is a network of an operator B in a country Z, and an hPLMN 2 is a network of an operator C, where the operator B is an operator before mobile number portability of a user, and the operator C is an operator after the mobile number portability of the user. It is assumed that the user sends an HTTP request message to the hPLMN 1 in the vPLMN, and includes a GPSI (a suffix of the GPSI still identifies the hPLMN 1). Therefore, the IPX queries a UDM of the hPLMN 1 for a specific operator to which the user belongs. Because the user has performed mobile number portability (that is, an hPLMN to which the user actually belongs currently is the hPLMN 2), the IPX cannot find, in the UDM of the hPLMN 1, the operator to which the user belongs. In this case, the error type is "PLMN not Found". Herein, the IPX may be an IPX in the network of the operator A in the country M, or may be an IPX in the network of the operator B. This is not limited.

In a possible scenario 10, when the IPX determines, based on an SUPI, that routing fails, the error type may be described as a "routing failure (Routing failure)"; when the IPX determines that SUPI translation fails, the error type may be described as an "SUPI translation failure (SUPI translation failure)"; or when the IPX determines, based on an SUPI, that roaming is not allowed, the error type may be described as "roaming not allowed (Roaming not allowed)". Correspondingly, after receiving any one of the foregoing error types, the cSEPP may also cancel sending of the HTTP request message.

For example, it is assumed that the cIPX may provide an SUPI translation service. After the cIPX receives the HTTP request message carrying SUPI 1, if the cIPX cannot complete translation of SUPI 1, for example, an SUPI translation list of the cIPX does not include information after translation and corresponding to SUPI 1, the error type is "SUPI translation failure".

Optionally, when the generated error message is ProblemDetails (that is, the foregoing implementation 4 or implementation 5), invalidParams in ProblemDetails may be defined as the following several types.

When the error type is that "an IE is encrypted while it was expected to be available in the clear", "an IE is not encrypted while its availability in the clear is not required", or "an IE is encrypted while it was expected to be available in the clear", invalidParams is an IE that causes the error. For example, when the IPX discovers that an SUPI was expected to be encrypted while the SUPI is not encrypted, invalidParams is an SUPI.

When the error type is "the N32 connection cannot be set up due to a connectivity issue", "the message was not delivered due to contractual reasons", or "Incorrect message format", invalidParams is left empty.

When the error type is "Network Topology is not hidden", invalidParams is an unhidden NF FQDN.

When the error information type is "NF request is rejected/disallowed", invalidParams is an IE that causes an NF to be rejected.

When the error type is "PLMN not Found", invalidParams is a GPSI.

When the error type is "Routing failure", "SUPI translation failure", or "Roaming not allowed", invalidParams is an SUPI.

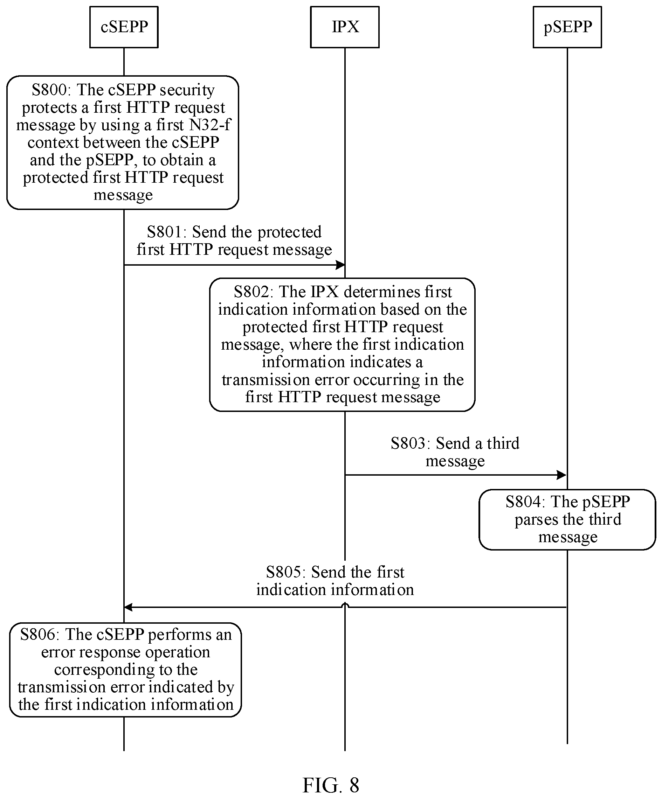

FIG. 8 is another schematic interaction flowchart of a communication method according to an embodiment of this application. As shown in FIG. 8, the communication method includes the following steps S800 to S806. The method shown in FIG. 8 may be performed by a cSEPP, a pSEPP, and an IPX, or the method shown in FIG. 8 may be performed by a chip in the cSEPP, a chip in the pSEPP, and a chip in the IPX. For ease of description, in FIG. 8, an example in which the method is performed by the cSEPP, a pSEPP, and an IPX for description is mainly used for description. It should be noted that FIG. 8 is a schematic flowchart of a method embodiment of this application, and shows detailed communication steps or operations of the method. However, these steps or operations are merely examples. Other operations or variants of various operations in FIG. 8 may be further performed in embodiments of this application. In addition, the steps in FIG. 8 may be separately performed in a sequence different from that presented in FIG. 8, and not all the operations in FIG. 8 may be necessarily performed.

S800: The cSEPP performs security protection on a first HTTP request message by using a first N32-f context between the cSEPP and the pSEPP, to obtain a protected first HTTP request message.

For understanding of step S800, refer to the descriptions of step S700. Details are not described herein.

S801: The cSEPP sends the protected first HTTP request message to the IPX. Correspondingly, the IPX receives the protected first HTTP request message from the cSEPP.

For understanding of step S801, refer to the descriptions of step S701. Details are not described herein.

S802: The IPX determines first indication information based on the protected first HTTP request message, where the first indication information indicates a transmission error of the first HTTP request message.

The first indication information is carried in an error message. In addition, in the embodiment shown in FIG. 8, the IPX may continue to append the error message to the received protected first HTTP request message, and sends the protected first HTTP request message and the error message together to the pSEPP. In other words, in this application, the IPX does not discard the protected first HTTP request message, appends the error message to the protected first HTTP request message, and then sends the protected first HTTP request message and the error message together to the pSEPP.

It should be understood that the IPX in this application may be a cIPX and/or a pIPX. Therefore, for ease of description, the IPX is uniformly used for description subsequently. For more understanding of the IPX, refer to the related descriptions in S702. Details are not described herein.

S803: The IPX sends a third message to the pSEPP. Correspondingly, the pSEPP receives the third message from the IPX.

The third message includes an original JSON block in the protected first HTTP request message and a JSON block corresponding to the error message. The following separately describes formats of the third message.

In a possible implementation (1), the third message generated by the IPX may include two JSON blocks: an original JSON block and a JSON block 8. The JSON block 8 is the JSON block corresponding to the error message, and the JSON block 8 includes the first indication information and tag (to be specific, tag copied from the original JSON block). Optionally, the JSON block 8 may further include information such as JWS signature (described as JWS signature 5 below for ease of differentiation). JWS signature 5 is a signature generated after integrity protection is performed on an IE that needs integrity protection in the JSON block 8.

In a possible implementation (2), the third message generated by the IPX may include three JSON blocks: an original JSON block, a JSON block 9, and a JSON block 10.

The JSON block 9 is a JSON block generated after the IPX performs normal processing (for example, modificationsBlock generated after processing is performed in step 4 in FIG. 4). A difference from that in step 4 in FIG. 4 lies in that indication information (referred to as third indication information subsequently for ease of differentiation) may be further newly added to the JSON block 9 in this embodiment of this application. The third indication information indicates that the JSON block 10 exists. Optionally, the JSON block 9 may further include JWS signature (referred to as JWS signature 6 subsequently for ease of differentiation). JWS signature 6 may be a signature generated after integrity protection is performed on an IE that needs integrity protection in the JSON block 9.

The JSON block 10 is the JSON block corresponding to the error message, and the JSON block 10 includes the first indication information and tag (to be specific, tag copied from the original JSON block). Optionally, the JSON block 10 may further include information such as JWS signature (referred to as JWS signature 7 subsequently for ease of differentiation). JWS signature 7 may be a signature generated after integrity protection is performed on an IE that needs integrity protection in the JSON block 10.

S804: The pSEPP parses the third message.

In some feasible implementations, that the pSEPP parses the third message may be understood as that the pSEPP first verifies, based on tag in the original JSON block, integrity of an IE that needs integrity protection in the original JSON block, and decrypts ciphertext in reformattedData. If the integrity verification is successful and the decryption is successful, the pSEPP continues to verify integrity of the error message (that is, perform integrity verification based on a JWS signature in the JSON block corresponding to the error message); after the verification succeeds, the pSEPP obtains the first indication information through parsing (similar to by using step 8 in FIG. 4); and then, the pSEPP sends the first indication information to the cSEPP.

It should be understood that, for integrity verification performed based on tag and integrity verification performed based on JWS signature, refer to the related descriptions in the foregoing "5. JWE and JWS". Details are not described herein.

S805: The pSEPP sends the first indication information to the cSEPP, where the first indication information indicates the transmission error of the first HTTP request message. Correspondingly, the cSEPP receives the first indication information from the IPX.

In a possible implementation 1, the first indication information sent by the pSEPP to the cSEPP may be carried in reformattedData, and aad or ciphertext in reformattedData is used to carry the first indication information. In other words, the pSEPP may send the first indication information to the cSEPP in a PRINS manner.

Optionally, in a possible implementation 2, the pSEPP may send the first indication information to the cSEPP by using ProblemDetails. It should be noted that in this implementation, more first indication information (for example, one or more of the error types described in the foregoing scenario 1 to scenario 10) needs to be added to the description column in Table 1. Therefore, the pSEPP may send the newly added first indication information to the cSEPP by using ProblemDetails.

Optionally, invalidParams in ProblemDetails may be defined the following several types.

When the error type is that "an IE is encrypted while it was expected to be available in the clear", an IE is not encrypted while its availability in the clear is not required", or "an IE is encrypted while it was expected to be available in the clear", invalidParams is an IE that causes the error. For example, when the IPX discovers that an SUPI was expected to be encrypted while the SUPI is not encrypted, invalidParams is an SUPI.

When the error type is "the N32 connection cannot be set up due to a connectivity issue", "the message was not delivered due to contractual reasons", or "Incorrect message format", invalidParams is left empty.

When the error type is "Network Topology is not hidden", invalidParams is an unhidden NF FQDN.

When an error information type is "NF request is rejected/disallowed", invalidParams is an IE that causes an NF to be rejected.

When the error type is "PLMN not Found", invalidParams is a GPSI.

When the error type is "Routing failure", "SUPI translation failure", or "Roaming not allowed", invalidParams is an SUPI.

Optionally, in this application, it may be further defined that an error type indicated by the first indication information is specifically placed in title, detail, or cause in ProblemDetails. This is not specifically limited.

S806: The cSEPP performs an error response operation corresponding to the transmission error indicated by the first indication information.

It should be noted that an implementation in which the cSEPP determines different types of response operations based on received error types in step S805 is the same as an implementation in which the cSEPP determines different types of response operations based on received error types in step S704 in FIG. 7. Details are not described herein again.

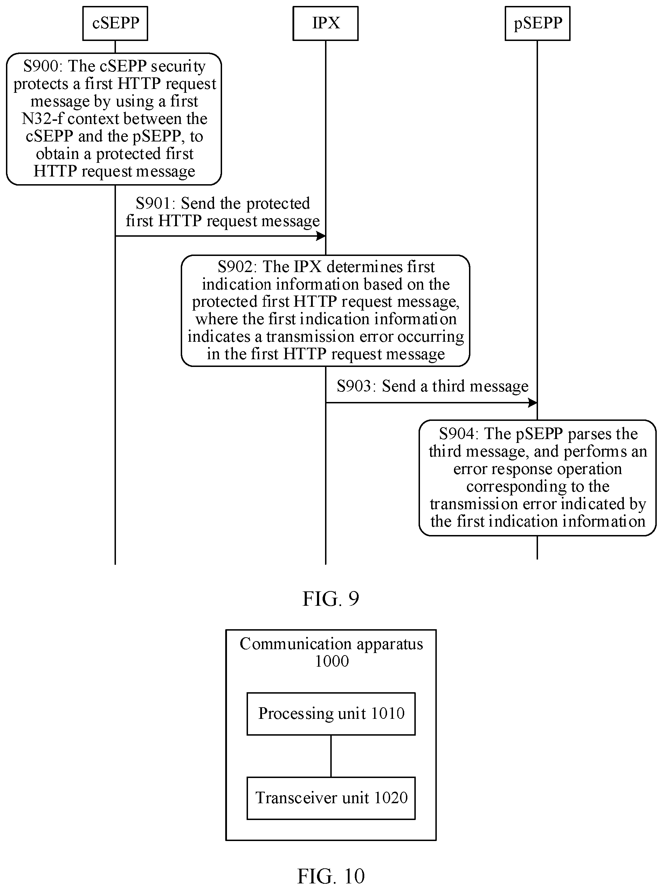

FIG. 9 is still another schematic interaction flowchart of a communication method according to an embodiment of this application. As shown in FIG. 9, the communication method includes the following steps S900 to S904. The method shown in FIG. 9 may be performed by a cSEPP, a pSEPP, and an IPX, or the method shown in FIG. 9 may be performed by a chip in the cSEPP, a chip in the pSEPP, and a chip in the IPX. For ease of description, in FIG. 9, an example in which the method is performed by the cSEPP, a pSEPP, and an IPX for description is mainly used for description. It should be noted that, FIG. 9 is a schematic flowchart of a method embodiment of this application, and shows detailed communication steps or operations of the method. However, these steps or operations are merely examples. Other operations or variants of various operations in FIG. 9 may be further performed in embodiments of this application. In addition, the steps in FIG. 9 may be separately performed in a sequence different from that presented in FIG. 9, and not all the operations in FIG. 9 may be necessarily performed.

S900: The cSEPP performs security protection on a first HTTP request message by using a first N32-f context between the cSEPP and the pSEPP, to obtain a protected first HTTP request message.

For understanding of step S900, refer to the descriptions of step S800. Details are not described herein.

S901: The cSEPP sends the protected first HTTP request message to the IPX. Correspondingly, the IPX receives the protected first HTTP request message from the cSEPP.

For understanding of step S901, refer to the descriptions of step S801. Details are not described herein.

S902: The IPX determines first indication information based on the protected first HTTP request message, where the first indication information indicates a transmission error of the first HTTP request message.

For understanding of step S902, refer to the descriptions of step S802. Details are not described herein.

S903: The IPX sends a third message to the pSEPP. Correspondingly, the pSEPP receives the third message from the IPX.

For understanding of step S903, refer to the descriptions of step S803. Details are not described herein.

S904: The pSEPP parses the third message, and performs an error response operation corresponding to the transmission error indicated by the first indication information.

Specifically, the pSEPP parses the third message, to obtain an original JSON block included in the third message and a JSON block corresponding to an error message. Then, the pSEPP obtains, through parsing, ciphertext and/or JsonPayload carried in the original JSON block, and obtains, through parsing, the first indication information carried in the JSON block corresponding to the error message.

It should be noted that, in step S904, after the pSEPP obtains, through parsing, specific content included in the third message, the pSEPP performs the error response operation corresponding to the transmission error indicated by the first indication information. An implementation in which the pSEPP performs different types of response operations based on error types indicated by the first indication information in step S904 is similar to an implementation in which the cSEPP performs different types of response operations based on error types indicated by the first indication information in step S702 in FIG. 7. Differences lie in that:
in a scenario 1, a scenario 2, a scenario 5, a scenario 6, or a scenario 7, the pSEPP directly performs the corresponding error response operation in step S904, and for a manner in which the pSEPP performs the error response operation corresponding to the scenario 1, the scenario 2, the scenario 5, the scenario 6, or the scenario 7, refer to a manner in which the cSEPP performs the error response operation corresponding to the scenario 1, the scenario 2, the scenario 5, the scenario 6, or the scenario 7 in step S704, and details are not described herein again; and
in a scenario 3, a scenario 4, a scenario 8, a scenario 9, or a scenario 10, a manner in which the pSEPP responds to the error message is that the pSEPP sends indication information (described as fourth indication information hereinafter for ease of differentiation) to the cSEPP, where the fourth indication information indicates that error types of the transmission error are respectively "Network Topology is not hidden", "Incorrect message format", "NF request is rejected/disallowed", "PLMN not Found", "Routing failure", "SUPI translation failure", and "Roaming not allowed". Accordingly, the cSEPP determines whether to send a second HTTP request message (that is, retransmit an HTTP request message) or to cancel transmission of the first HTTP request message (that is, abort sending of the first HTTP request message).

It may be understood that in this embodiment of this application, an implementation in which the pSEPP sends the fourth indication information to the cSEPP is the same as an implementation in which the pSEPP sends the first indication information to the cSEPP in step S805. To be specific, the pSEPP may send, to the cSEPP in a PRINS manner, the error type indicated by the fourth indication information, or the pSEPP sends, to the cSEPP by using ProblemDetails, the error type indicated by the fourth indication information. Details are not described herein again.

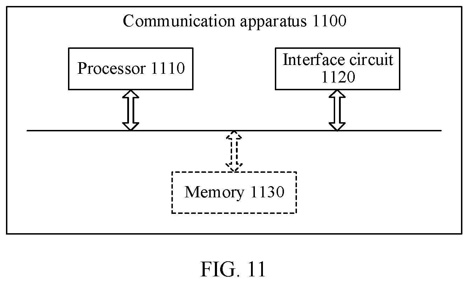

The following describes in detail communication apparatuses provided in this application with reference to FIG. 10 and FIG. 11.

It may be understood that, to implement functions in the foregoing embodiments, the communication apparatus includes corresponding hardware structures and/or software modules for performing the functions. A person skilled in the art should be easily aware that, in combination with the units and the method steps in the examples described in embodiments disclosed in this application, this application can be implemented in a form of hardware or a combination of the hardware and computer software. Whether a function is performed by using hardware or hardware driven by computer software depends on a particular application scenario and a design constraint of the technical solutions.

FIG. 10 and FIG. 11 are diagrams of structures of possible communication apparatuses according to embodiments of this application. These communication apparatuses may be configured to implement functions of the SEPP (for example, the first SEPP or the second SEPP) or the IPX (for example, the first IPX or the second IPX) in the foregoing method embodiments, and therefore can also achieve the beneficial effects of the foregoing method embodiments. In embodiments of this application, the communication apparatus may be the cSEPP or the pSEPP shown in FIG. 3, or may be the cIPX or the pIPX shown in FIG. 3. Optionally, the communication apparatus may alternatively be a module (for example, a chip) used in a SEPP or an IPX.

As shown in FIG. 10, a communication apparatus 1000 includes a processing unit 1010 and a transceiver unit 1020.

When the communication apparatus 1000 is configured to implement functions of a first SEPP,
the processing unit 1010 is configured to perform security protection on a first hypertext transfer protocol HTTP message by using a first N32-f context between the first SEPP and a second SEPP, to obtain the protected first HTTP message, where the first HTTP message is used to implement a roaming service between the first SEPP and the second SEPP;
the transceiver unit 1020 is configured to send the protected first HTTP message to an internet protocol exchange service IPX, where the IPX is used to route a message sent by the first SEPP to the second SEPP;
the transceiver unit 1020 is configured to receive first indication information from the IPX, where the first indication information indicates a transmission error of the first HTTP message; and
the processing unit 1010 is configured to perform an error response operation corresponding to the transmission error.

The error response operation includes any one of the following:
the first SEPP re-exchanges a parameter with the second SEPP to obtain a second N32-f context between the first SEPP and the second SEPP, the first SEPP performs security protection on the first HTTP message by using the second N32-f context, to obtain a re-protected first HTTP message, and the first SEPP sends the re-protected first HTTP message to the IPX; or
the first SEPP modifies the first HTTP message based on the first indication information, to obtain a second HTTP message, the first SEPP performs security protection on the second HTTP message by using the first N32-f context, to obtain a protected second HTTP message, and the first SEPP sends the protected second HTTP message to the IPX.

When the communication apparatus 1000 is configured to implement functions of an IPX,
the transceiver unit 1020 is configured to receive a protected first hypertext transfer protocol HTTP message from a first SEPP, where the protected first HTTP message is obtained by performing security protection on the first HTTP message based on a first N32-f context between the first SEPP and a second SEPP; and
the transceiver unit 1020 is configured to send first indication information to the first SEPP, where the first indication information indicates a transmission error of the first HTTP message.

The transmission error includes one or more of the following:
a first information element IE is encrypted in the first HTTP message while the IPX requires that the first information element not be encrypted;
a second IE is not encrypted in the first HTTP message while the IPX requires that the second IE be encrypted;
a network topology of a public land mobile network PLMN in which the first SEPP is located is not hidden, where a network function full qualified domain name NF FQDN in the first HTTP message belongs to the network topology of the PLMN in which the first SEPP is located; or
a message format of the first HTTP message is not the first format.

For more detailed descriptions of the processing unit 1010 and the transceiver unit 1020, refer to the related descriptions in the method embodiment in any one of FIG. 7 to FIG. 9.

As shown in FIG. 11, a communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1000 may further include a memory 1130, configured to: store instructions executed by the processor 1110, store input data needed by the processor 1110 to run the instructions, or store data generated after the processor 1110 runs the instructions.

When the communication apparatus 1000 is configured to implement the method shown in any one of FIG. 7 to FIG. 9, the processor 1110 is configured to implement functions of the foregoing processing unit 1010, and the interface circuit 1120 is configured to implement functions of the foregoing transceiver unit 1020.

When the communication apparatus is a chip used in a SEPP, the chip in the SEPP implements a function of the SEPP in the foregoing method embodiments. The chip in the SEPP receives, through another module (like a radio frequency module or an antenna) in the SEPP, information sent by an IPX to the SEPP. Alternatively, the chip in the SEPP sends information to another module (like a radio frequency module or an antenna) in the SEPP. The information is sent by the SEPP to the IPX.

When the communication apparatus is a module used in an IPX, the module in the IPX implements a function of the IPX in the foregoing method embodiments. The module in the IPX receives information from another module (like a radio frequency module or an antenna) in the IPX, where the information is sent by a SEPP to the IPX. Alternatively, the module in the IPX sends information to another module (like a radio frequency module or an antenna) in the IPX, where the information is sent by the IPX to a SEPP.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. In an example, a storage medium is coupled to the processor, so that the processor can read information from the storage medium, and write information into the storage medium. The storage medium may alternatively be a component of the processor. The processor and the storage medium may be disposed in an ASIC. In addition, the ASIC may be located in an IPX or a SEPP. The processor and the storage medium may alternatively exist in an IPX or a SEPP as discrete components.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers mentioned in embodiments of this application are merely for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
performing, by a first security edge protection proxy SEPP, security protection on a first hypertext transfer protocol HTTP message by using a first N32-f context between the first SEPP and a second SEPP, to obtain a protected first HTTP message, wherein the first HTTP message is used to implement a roaming service between the first SEPP and the second SEPP;
sending, by the first SEPP, the protected first HTTP message to an internet protocol exchange service IPX, wherein the IPX is used to route a message sent by the first SEPP to the second SEPP;
receiving, by the first SEPP, an error message from the IPX, wherein the error message comprises first indication information, and the first indication information indicates a transmission error of the first HTTP message; and
performing, by the first SEPP, an error response operation corresponding to the transmission error.

2. The method according to claim 1, wherein the error response operation comprises any one of the following:
re-exchanging, by the first SEPP, a parameter with the second SEPP to obtain a second N32-f context between the first SEPP and the second SEPP, performing, by the first SEPP, security protection on the first HTTP message again by using the second N32-f context, to obtain a re-protected first HTTP message, and sending, by the first SEPP, the re-protected first HTTP message to the IPX; or
modifying, by the first SEPP, the first HTTP message based on the first indication information, to obtain a second HTTP message, t performing, by the first SEPP, security protection on the second HTTP message by using the first N32-f context, to obtain a protected second HTTP message, and sending, by the first SEPP, the protected second HTTP message to the IPX.

3. The method according to claim 1 or 2, wherein that the first indication information indicates the transmission error of the first HTTP message comprises:
the first indication information indicates that an information element IE is encrypted in the first HTTP message while the IPX requires that the information element not be encrypted; or
the first indication information indicates that an information element IE is not encrypted in the first HTTP message while the IPX requires that the information element be encrypted.

4. The method according to claim 3, wherein an encryption policy for the IE in the first N32-f context is that the IE shall be encrypted, and an encryption policy for the IE in the second N32-f context is that the IE shall not be encrypted; or
an encryption policy for the IE in the first N32-f context is that the IE shall not be encrypted, and an encryption policy for the IE in the second N32-f context is that the IE shall be encrypted.

5. The method according to claim 4, wherein the re-exchanging the parameter with the second SEPP to obtain the second N32-f context between the first SEPP and the second SEPP comprises:
sending, by the first SEPP, a parameter exchange request to the second SEPP, wherein an encryption policy comprised in the parameter exchange request for the IE is that the IE shall not be encrypted; and
receiving, by the first SEPP, a parameter exchange response from the second SEPP, wherein an encryption policy comprised in the parameter exchange response for the IE is that the IE shall not be encrypted; or
sending, by the first SEPP, a parameter exchange request to the second SEPP, wherein an encryption policy comprised in the parameter exchange request for the IE is that the IE shall be encrypted; and
receiving, by the first SEPP, a parameter exchange response from the second SEPP, wherein an encryption policy that is for the IE and that is comprised in the parameter exchange response is that the IE shall be encrypted.

6. The method according to claim 1 or 2, wherein that the first indication information indicates the transmission error of the first HTTP message comprises:
when the protected first HTTP message comprises a plaintext identifier of a first network function NF, the first indication information indicates that a network topology of a public land mobile network PLMN in which the first SEPP is located is not hidden, wherein the first NF is a network element requesting the roaming service.

7. The method according to claim 6, wherein the modifying the first HTTP message based on the first indication information, to obtain the second HTTP message comprises:
anonymizing the plaintext identifier of the first NF in the first HTTP message, to obtain an anonymous identifier of the first NF; and
replacing, with the anonymous identifier of the first NF, the plaintext identifier of the first NF in the first HTTP message, to obtain the second HTTP message.

8. The method according to claim 1 or 2, wherein that the first indication information indicates the transmission error of the first HTTP message comprises:
the first indication information indicates that a message format of the first HTTP message is not a first format.

9. The method according to claim 8, wherein the modifying the first HTTP message based on the first indication information, to obtain the second HTTP message comprises:
converting, by the first SEPP, the message format of the first HTTP message into the first format, to obtain the second HTTP message.

10. The method according to claims 1 to 9, wherein receiving, by the first SEPP, the first indication information from the IPX comprises:
receiving, by the first SEPP, a first message from the IPX, wherein the first message comprises problem details ProblemDetails, and the ProblemDetails comprises the first indication information.

11. The method according to claim 10, wherein the ProblemDetails further comprises a first signature corresponding to the first indication information, or the first message further comprises a first signature corresponding to the first indication information, wherein the first signature is used to protect integrity of the first indication information;
before performing, by the first SEPP, the error response operation corresponding to the transmission error, the method further comprises:
verifying, by the first SEPP, the integrity of the first indication information based on the first signature, to obtain a verification result; and
performing, by the first SEPP, the error response operation corresponding to the transmission error comprises:
in the case that the verification result is successful verification, performing, by the first SEPP, the error response operation corresponding to the transmission error.

12. The method according to any one of claims 1 to 9, wherein receiving, by the first SEPP, the first indication information from the IPX comprises:
receiving, by the first SEPP, a second message from the IPX, wherein the second message comprises the first indication information and first reformatted data reformattedData; and
obtaining, based on the first reformattedData, the first indication information by parsing the second message.

13. The method according to claim 12, wherein the first reformattedData comprises one or more of the following information: N32-f context identifier n32fContextID, message identifier messageId, or authorized IPX identifier authorizedIpxId, wherein n32fContextID is an identifier of the first N32-f context, messageId is an identifier of the first HTTP message, and authorizedIpxId is an identifier of the IPX; and
the obtaining, based on the first reformattedData, the first indication information by parsing the second message comprises:
in the case that n32fContextID in the first reformattedData is the same as n32fContextID in the first HTTP message, obtaining, by the first SEPP, the first indication information in the second message by parsing the second message;
in the case that messageId in the first reformattedData is the same as messageId in the first HTTP message, obtaining, by the first SEPP, the first indication information in the second message by parsing the second message; or
in the case that authorizedIpxId in the first reformattedData is the same as authorizedIpxId in the first HTTP message, obtaining, by the first SEPP, the first indication information in the second message by parsing the second message.

14. The method according to claim 13, wherein messageId in the first reformattedData is used to determine a message in which an error occurred; and in the case that messageId in the first reformattedData is the same as messageId in the first HTTP message, the first SEPP determines that the message in which the transmission error occurs is the first HTTP message.

15. The method according to claim 12, wherein the first reformattedData does not comprise one or more of the following information: a ciphertext ciphertext or a Json payload JsonPayload, wherein ciphertext comprises information obtained by encrypting, according to the encryption policy in the first N32-f context, the IE that requires encryption in the first HTTP message, and JsonPayload comprises an IE that requires integrity protection in the first HTTP message; and the IE that requires integrity protection in the first HTTP message is determined according to an integrity protection policy in the first N32-f context; and
the obtaining, based on the first reformattedData, the first indication information by parsing the second message comprises:
in the case that the first reformattedData does not comprise ciphertext, obtaining, by the first SEPP, the first indication information in the second message by parsing the second message; or
in the case that the first reformattedData does not comprise JsonPayload, obtaining, by the first SEPP, the first indication information in the second message by parsing the second message.

16. A communication method, comprising:
receiving, by an internet protocol exchange service IPX, a protected first hypertext transfer protocol HTTP message from a first security edge protection proxy SEPP, wherein the protected first HTTP message is obtained by performing security protection on the first HTTP message based on a first N32-f context between the first SEPP and a second SEPP; and
sending, by the IPX, first indication information to the first SEPP, wherein the first indication information indicates a transmission error of the first HTTP message, wherein
the transmission error comprises one or more of the following:
an information element IE is encrypted in the first HTTP message while the IPX requires that the information element not be encrypted;
an information element IE is not encrypted in the first HTTP message while the IPX requires that the information element be encrypted;
a network topology of a public land mobile network PLMN in which the first SEPP is located is not hidden; or
a message format of the first HTTP message is not a first format.

17. The method according to claim 16, wherein sending, by the IPX, the first indication information to the first SEPP comprises:
sending, by the IPX, a second message to the first SEPP, wherein the second message comprises the first indication information and first reformatted data reformattedData.

18. The method according to claim 17, wherein the first reformattedData comprises one or more of the following information: N32-f context identifier n32fContextID, message identifier messageId, or authorized IPX identifier authorizedIpxId, wherein n32fContextID is an identifier of the first N32-f context, messageId is an identifier of the first HTTP message, and authorizedIpxId is an identifier of the IPX.

19. The method according to any one of claims 16 to 18, wherein sending, by the IPX, the first indication information to the first SEPP comprises:
determining, by the IPX, whether the IE in the protected first HTTP message is encrypted, and in the case that the IE is encrypted, sending, by the IPX, the first indication information to the first SEPP, wherein the first indication information indicates that the IE is encrypted in the protected first HTTP message while the IPX requires that the information element not be encrypted; or
determining, by the IPX, whether the IE in the protected first HTTP message is encrypted, and in the case that the IE is not encrypted, sending, by the IPX, the first indication information to the first SEPP, wherein the first indication information indicates that the IE is not encrypted in the protected first HTTP message while the IPX requires that the IE be encrypted; or
in the case that the IPX determines that the protected first HTTP message comprises a plaintext identifier of a first network function NF, sending, by the IPX, the first indication information to the first SEPP, wherein the first indication information indicates that the network topology of the PLMN in which the first SEPP is located is not hidden, wherein the first NF is a network element requesting the roaming service; or
determining, by the IPX, whether a name of the message format of the protected first HTTP message in a message header is the first format, and when the name of the message format of the protected first HTTP message in the message header is not the first format, sending, by the IPX, the first indication information to the first SEPP, wherein the first indication information indicates that the message format of the protected first HTTP message is not the first format.

20. The method according to any one of claims 16 to 19, wherein the method further comprises:
receiving, by the IPX, a re-protected first HTTP message from the first SEPP, wherein the re-protected first HTTP message is obtained by performing security protection on the first HTTP message based on a second N32-f context between the first SEPP and the second SEPP, and the second N32-f context is obtained by re-exchanging, by the first SEPP, a parameter with the second SEPP; and
sending, by the IPX, the re-protected first HTTP message to the second SEPP.

21. The method according to any one of claims 16 to 19, wherein the method further comprises:
receiving, by the IPX, a protected second HTTP message from the first SEPP, wherein the protected second HTTP message is obtained by performing security protection on a second HTTP message based on the first N32-f context, and the second HTTP message is obtained by modifying the first HTTP message based on the first indication information; and
sending, by the IPX, the protected second HTTP message to the second SEPP.

22. A communication apparatus, comprising a module configured to perform the method according to any one of claims 1 to 15, or a module configured to perform the method according to any one of claims 16 to 21.

23. A communication apparatus, comprising a processor and a memory, wherein the memory is configured to store a computer program, and the processor is configured to invoke the computer program from the memory to perform the method according to any one of claims 1 to 15 or implement the method according to any one of claims 16 to 21.

24. A computer-readable storage medium, wherein the storage medium stores a computer program or instructions, and when the computer program or the instructions are executed by a communication apparatus, the method according to any one of claims 1 to 15 or the method according to any one of claims 16 to 21 is implemented.

25. A computer program product, comprising computer program code, wherein when the computer program code is run on a computer, the method according to any one of claims 1 to 15 or the method according to any one of claims 16 to 21 is implemented.

26. A communication system, comprising a first security edge protection proxy SEPP and an internet protocol exchange service IPX, wherein the first SEPP is configured to implement the method according to any one of claims 1 to 15, and the IPX is configured to implement the method according to any one of claims 16 to 21.
